(19) Europäisches Patentamt
European Patent Office
Office européen des brevets

(11) **EP 4 629 550 A1**

(12) **EUROPEAN PATENT APPLICATION**

(43) Date of publication:
**08.10.2025   Bulletin 2025/41**

(21) Application number: **25168272.0**

(22) Date of filing: **03.04.2025**

(51) International Patent Classification (IPC):
**H04L 5/00** (2006.01)      **H04W 74/0833** (2024.01)

(52) Cooperative Patent Classification (CPC):
**H04L 5/0053; H04W 74/0833**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **04.04.2024   US 202463574767 P
08.05.2024   US 202463644414 P
27.03.2025   US 202519093038**

(71) Applicant: **Samsung Electronics Co., Ltd.
Suwon-si, Gyeonggi-do 16677 (KR)**

(72) Inventors:
• **AWADIN, Mohamed
San Jose, CA, 95134 (US)**
• **BAE, Jung Hyun
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **MULTIPLE PHYSICAL RANDOM ACCESS CHANNEL TRANSMISSIONS IN SUBBAND FULL DUPLEX OPERATION**

(57)    A method is disclosed for enhancing subband full duplex operation. The method may include receiving (1905), by a user equipment, UE, (2105) a configuration for subband full duplex, SBFD, operation and Physical Random Access Channel, PRACH, repetition, and constructing (1910), by the UE (2105), a RACH Occasion, RO, group based on the configuration, wherein the RO group comprises one or more ROs from a set of SBFD symbols and a set of non-SBFD symbols.

Receive a configuration for subband full duplex (SBFD) operation and Physical Random Access Channel (PRACH) repetition — 1905

Construct a RACH Occasion (RO) group based on the configuration — 1910

Communicate with a base station utilizing at least one RO from the RO group — 1915

**FIG. 19**

EP 4 629 550 A1

**Description**

**BACKGROUND**

**1. FIELD**

Aspects of some embodiments relate to wireless communications. For example, aspects of some embodiments of the present disclosure relate to improvements to physical random access channel (PRACH) transmissions in subband full duplex (SBFD) operation.

**2. DESCRIPTION OF THE RELATED ART**

In subband full duplex (SBFD) operation, some network nodes (e.g., a base station, such as gNB) may change their antenna configurations between SBFD symbols and non-SBFD symbols to handle the self-interference caused by concurrent transmission and reception in full duplex operation. Therefore, in response to RACH occasion (ROs) within an RO group being associated with a certain repetition number may fall in SBFD symbols and others may fall in non-SBFD symbols, a legacy PRACH repetition scheme may need to be adjusted or improve. The terminology, such as, a RO group associated with a certain repetition number and a set consisting of the same number of valid PRACH occasions may be interchangeably used throughout the present disclosure. For example, if (e.g., when) a UE transmits multiple PRACH transmissions in ROs within the same RO group across SBFD symbols and non-SBFD symbols, some of those transmission may not be received by the gNB utilizing the same receiving (Rx) beam. Some of those transmissions may not be received properly by the gNB as the UE does not know whether or not the gNB has changed the antenna configurations between SBFD symbols and non-SBFD symbols.

Additionally, in legacy New Radio (NR), if (e.g., when) a UE requests Msg3 repetition, the UE may select one of the RACH resources (e.g., RO and/or preamble) for requesting the Msg3 repetition. For example, if (e.g., when) the UE accesses the need of the Msg3 repetition based on Msg3 being transmitted in SBFD symbols, however, the UE transmits Msg3 on non-SBFD symbols, then the UE's initial assessment may not be valid. Therefore, there is a need for improving PRACH transmissions in SBFD operation.

The above information disclosed in this Background section is only for enhancement of understanding of the background and therefore the information discussed in this Background section does not necessarily constitute prior art.

**SUMMARY**

Modern communications equipment (e.g., mobile phones, vehicles, laptops, satellites, and the like), also known as UE, may communicate with a network node (e.g., a gNB) to receive data from a network associated with the network node and to transmit data to the network associated with the network node. For multiple PRACH transmissions, applying legacy approach to construct RO groups may be problematic. For example, if an RO group includes ROs in SBFD symbol and ROs in non-SBFD symbol, the gNB may use different antenna configurations causing inefficient receptions of PRACH transmissions. Additionally, the start of the RO groups may not be aligned between a legacy UE and a SBFD-aware UE as the starting points for forming the RO groups are different. This increases the blind detection complexity at the gNB. Therefore, a method for constructing RO groups for enhancing SBFD operations is desired.

According to one or more embodiments of the present disclosure, a method may include receiving, by a user equipment (UE), a configuration for subband full duplex (SBFD) operation and Physical Random Access Channel (PRACH) repetition, and constructing, by the UE, a RACH Occasion (RO) group based on the configuration, wherein the RO group comprises one or more ROs from a set of SBFD symbols and a set of non-SBFD symbols.

In one or more embodiments, the one or more ROs of the RO groups may include one or more of: at least one RO from the set of SBFD symbols; at least one RO from the set of non-SBFD symbols; and/or at least one RO from across the set of SBFD symbols and the set of non-SBFD symbols.

In one or more embodiments, the RO group may include a plurality of ROs and includes at least one RO from the set of SBFD symbols and at least one RO from the set of non-SBFD symbols.

In one or more embodiments, the method may further include sending, by the UE, to a base station, a communication signal, where the communication signal is configured based on the RO group to establish a communication between the UE and the base station.

In one or more embodiments, the constructing of the RO group may further include constructing, by the UE, a first set of RO groups and a second set of RO groups, where each of the RO groups in the first set includes one or more ROs from the set of SBFD symbols, and each of the RO groups in the second set includes one or more ROs from the set of non-SBFD symbols, where the constructed RO group is included in the first set of RO groups and the second set of RO groups.

In one or more embodiments, each of the RO groups in the first set may only include the one or more ROs in SBFD symbol. Each of the RO groups in the second set may only include the one or more ROs in non-SBFD symbol.

In one or more embodiments, the method may further include: receiving, by the UE, a threshold data for determining a number of PRACH repetitions, where the threshold data may be based on a Reference Signal Received Power (RSRP) level, and determining, by the UE, the number of PRACH repetitions by comparing a RSRP of a downlink pathloss reference signal with the threshold value. The constructed RO group may be based on the determined number of PRACH repetitions

**In** one or more embodiments, the threshold data may indicate a first threshold value provided by a first higher layer signaling for the first set of RO groups, the threshold data may indicate a second threshold value provided by a second higher layer signaling for the second set of RO groups, and the first threshold value may be different from the second threshold value.

In one or more embodiments, the method may further include applying a legacy procedure to the first set of RO groups in response to a determination that a number of ROs in SBFD symbol is different from a number of ROs in non-SBFD symbol.

In one or more embodiments, the method may further include invalidating the RO group including the at least one RO from the set of SBFD symbols and the at least one RO from the set of non-SBFD symbols.

In one or more embodiments, the method may further include dropping a least one RO from the RO group including the at least one RO from the set of SBFD symbols and the at least one RO from the set of non-SBFD symbols, where a number of the dropped at least one RO is less than a number of remaining ROs.

In one or more embodiments, the at least one RO in SBFD symbol and the at least one RO in non-SBFD symbol may occupy different physical resource blocks (PRBs) and may be with same frequency resource index.

In one or more embodiments, the method may further include: receiving, by the UE, an indication via a higher layer signaling, where the indication indicates whether an RO group includes the at least one RO in SBFD symbol and the at least one RO in non-SBFD symbol.

According to some embodiments of the present disclosure, a UE may include a processing circuit, the processing circuit being configured to perform: receiving a configuration for SBFD operation and PRACH repetition, and constructing a RO group based on the configuration, where the RO group may include a plurality of ROs, and where the plurality of ROs may include: ROs in SBFD symbol; ROs in non-SBFD symbol; at least one RO in SBFD symbol and at least one RO in non-SBFD symbol; and/or at least one RO across SBFD symbol and non-SBFD symbol.

According to some embodiments of the present disclosure, a system may include a UE configured to receive a configuration for SBFD operation and PRACH repetition, and construct a RO group based on the configuration, where the RO group may include a plurality of ROs, and where the plurality of ROs may include: ROs in SBFD symbol; ROs in non-SBFD symbol; at least one RO in SBFD symbol and at least one RO in non-SBFD symbol; and/or at least one RO across SBFD symbol and non-SBFD symbol.

## BRIEF DESCRIPTION OF THE DRAWINGS

The above and other aspects of the present disclosure will be more clearly understood from the following detailed description of the illustrative, non-limiting embodiments with reference to the accompanying drawings.

FIG. 1 is a diagram depicting an example 4-step RACH procedure in Release 16 (Rel-16), according to some embodiments of the present disclosure.
FIG. 2 is a diagram depicting an example method for constructing RO group, according to some embodiments of the present disclosure.
FIG. 3 is a diagram depicting an example RACH configuration being shared between legacy UEs and SBFD-aware UEs, according to some embodiments of the present disclosure.
FIG. 4 is a diagram depicting an example method for constructing two sets of RO groups, according to some embodiments of the present disclosure.
FIG. 5 is a diagram depicting an example UL-DL slot configuration with ROs in SBFD symbol configured as flexible, according to some embodiments of the present disclosure.
FIG. 6A is a diagram depicting an example method for handling ROs replicas in SBFD symbols configured as flexible, according to some embodiments of the present disclosure.
FIG. 6B is diagram depicting an example method for utilizing ROs outside the UL subband, according to some embodiments of the present disclosure.
FIG. 7 is a diagram depicting an example method for invalidating an RO group including ROs in both SBFD symbols and non-SBFD symbols, according to some embodiments of the present disclosure.
FIG. 8 is a diagram depicting an example method for invalidating an RO group including ROs in SBFD symbols configured as downlink and in SBFD symbols configured as flexible, according to some embodiments of the present disclosure.
FIG. 9 is a diagram depicting an example method for dropping ROs in a symbol type different than the symbol type of the first RO within an RO group, according to some embodiments of the present disclosure.
FIG. 10 is a diagram depicting an example method for dropping RO(s) in a first type of symbol having less number than RO(s) in a second type of symbol, according to some embodiments of the present disclosure.
FIG. 11 is diagram depicting an example method for dropping ROs in SBFD symbol configured as flexible within an RO group including ROs in SBFD symbol configured as downlink and flexible, according to some embodiments of the present disclosure.
FIG. 12A is a diagram depicting an example shared RO configuration for the legacy UE, according to some embodiments of the present disclosure.

FIG. 12B is a diagram depicting an example shared RO configuration for the SBFD-aware UE, according to some embodiments of the present disclosure.

FIG. 13 is a diagram depicting an example preamble partitioning between a SBFD-aware UE and a legacy UE, according to some embodiments of the present disclosure.

FIG. 14 is a diagram depicting an example method for constructing RO groups with a frequency offset between an RO in SBFD symbol and an RO in non-SBFD symbols, according to some embodiments of the present disclosure.

FIG. 15 is a diagram depicting an example method for constructing two sets of RO groups in response to FDMed ROs, according to some embodiments of the present disclosure.

FIG. 16 is a diagram depicting an example RO group having suitable number of ROs, according to some embodiments of the present disclosure.

FIG. 17 is a diagram depicting an example RO group including valid ROs in different RBs, according to some embodiments of the present disclosure.

FIG. 18 is a diagram depicting an example RO group in Set 1 with SBFD symbol configured as flexible, according to some embodiments of the present disclosure.

FIG. 19 is a flowchart depicting an example method for constructing RO groups, according to some embodiments of the present disclosure.

FIG. 20 is a block diagram of an electronic device in a network environment, according to some embodiments of the present disclosure.

FIG. 21 shows a system including a UE and a gNB in communication with each other, according to some embodiments of present disclosure.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the example embodiments of the present disclosure.

In 3GPP standard for New Radio (NR), a UE is designed to transmit different Uplink (UL) signals to a base station (e.g., gNB). In NR, a UE utilizes a UL transmission to convey a variety of information to the gNB. In particular, the UE sends user data to the gNB in a particular configuration of time and frequency resources, e.g., the Physical Uplink Shared Channel (PUSCH). Specifically, the Multiple Access (MAC) layer provides user data which are intended to be delivered to the corresponding layer at the gNB side. The Physical (PHY) layer of the UE takes the MAC layer data as an input and outputs the corresponding PUSCH signal through a PUSCH processing chain. Similarly, the UE sends control data to the gNB in the Physical Uplink Control Channel (PUCCH). The control data may be Uplink Control Information (UCI) and considered as the payload to the PUCCH signal.

Conversely, the UE is designed to receive different downlink (DL) signals from the gNB. Similar to the UL transmission, a UE receives a DL transmission to retrieve a variety of information from the gNB. The UE receives user data from the gNB in a particular configuration of time and frequency resources, e.g., the Physical Downlink Shared Channel (PDSCH). The PHY layer of the UE extracts data from the physical signal received on the PDSCH and provides the data to the MAC layer. Similarly, the UE receives control data from the gNB in the Physical Downlink Control Channel (PDCCH). The control data may be Downlink Control Information (DCI) and considered as the payload to the PDCCH.

Furthermore, a UE is provided with a Search Space (SS) set configuration and a control resource set (CORESET) configuration for monitoring DCI in a PDCCH in a serving cell. In particular, the SS set configuration provides PDCCH monitoring occasion information in time domain, and each monitoring occasion is associated with the CORESET configuration linked to the SS set configuration. A CORESET configuration provides a set of resource blocks (RB) and a symbol duration for PDCCH candidates monitoring where a PDCCH candidate including a set of control channel elements (CCE) depending on an aggregation level. A CCE may include 6 resource element groups (REGs), and each REG may be a group of 12 consecutive resource elements (REs). For example, a UE would monitor a set of REs for PDCCH candidates located in a specified time and frequency domain based on the CORESET and SS set configurations.

Another physical signal which is transmitted by the UE may be a Physical Random Access Channel (PRACH) signal. Similar to Long Term Evolution (LTE) cellular systems, a communication between the UE and gNB is frame-based. During an initial access procedure, the UE UL transmissions are not time-aligned with the gNB frame timing due to a roundtrip delay time being unaccounted for. In order to synchronize the frame timings for both of the UE and gNB, for example, the UL and DL transmissions, the UE sends the PRACH signal which is utilized by the gNB to make an estimate of the roundtrip delay time. The UE is then informed of the value of Timing Adjustment (TA) which is needed to apply to its UL transmission for a proper alignment of frame timings. Therefore, during the initial access procedure, the UE transmits the PRACH signal in addition to obtaining the system information from the gNB.

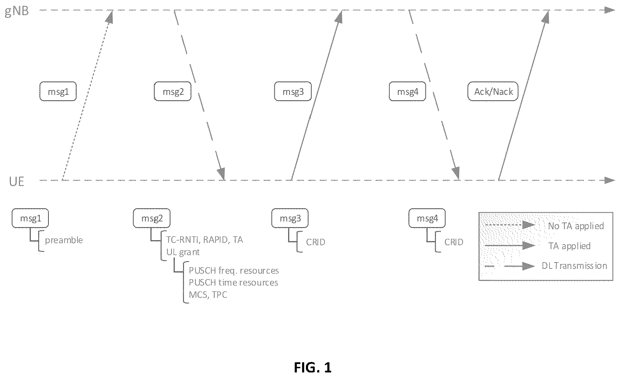

FIG. 1 is a diagram depicting an example 4-step RACH procedure in Release 16 (Rel-16), according to some embodiments of the present disclosure. Similar to LTE, a UE performs the initial access procedure through a process of Random Access (RA).

Before initializing the random access procedure, the UE receives broadcasted system information (e.g., Master information block (MIB)/System information block (SIB)) from the gNB by means of Synchronization Signal Block (SSB) transmission. For example, the UE attempts to receive the broadcast information which provides the UE with the necessary information about retrieving MIB and SIB. The system information may provide the UE with information about the configuration of the random access procedure. Multiple SSBs are typically broadcast in a periodic manner, where each SSB is sent by the gNB utilizing a different broad transmission beam. The UE then attempts to decode various SSBs, and chooses a suitable SSB (e.g., the best SSB, or a SSB with the highest Reference Signal Received Power (RSRP)). Such SSB may indicate a suitable beam (e.g., the best broad beam) to be utilized by the gNB for communication with the UE.

The 4-step RACH procedure may be described as follows:

(1) The UE starts by sending a preamble to the gNB, e.g., sending Msg1 to the gNB. The UE chooses one preamble from a pool of suitable/possible preambles. The identifier (ID) of the preamble chosen by the UE may be Random Access Preamble Identifier (RAPID). At this point, multiple UEs may potentially have the 4-step RA processes simultaneously initiated, and each UE may utilize a preamble with a different RAPID.

(2) In response to the preamble reception by the gNB being successful, the gNB sends Msg2 to the UE. Msg2 includes the RAPID of the preamble chosen by one UE (or in case of contention, multiple UEs), a Timing Advance (TA) value for the UE with the corresponding RAPID, and a UL grant for the transmission of Msg3.

(3) The UE proceeds by sending Msg3 utilizing the resources indicated in the UL grant. Msg3 includes a Contention Resolution ID (CRID) that is provided by higher layers to the physical layer of the UE. The UE applies the value of TA indicated in Msg2 to the transmission of Msg3. If (e.g., when) multiple UEs have the same RAPID, all UEs would transmit Msg3 including different CRIDs.

(4) The gNB sends Msg4 which includes the CRID of one UE. The UE which has the corresponding CRID proceeds by sending an acknowledgement (ACK) message acknowledging a successful reception of Msg4 and the initial access procedure.

If (e.g., when) picking a preamble for the Msg1 transmission, the UE first determines one group from a collection of groups of preambles from which the UE picks a particular preamble. The collection of groups are non-intersecting pools (e.g., non-overlapping pools) of preambles configured by the gNB inside the cell. In response to a UE picking a preamble from a particular group, the gNB determines, upon receiving the preamble, which group was picked by the UE. The method of indication may utilize the 4-step RACH process to indicate information about the pathloss level between the UE and gNB and the potential payload size of Msg3. For example, in the 4-step RACH process, the gNB configures two groups of preambles, for example, a group A and a group B. In response to the pathloss between the UE and the gNB being above a configured threshold, and/or in response to the expected payload size of Msg3 being above a certain threshold, the UE picks the group B. On the other hand, in response to the pathloss between the UE and the gNB being below a configured threshold, and/or in response to the expected payload size of Msg3 being below a certain threshold, the UE picks the group A.

After the UE sends Msg1 and Msg3, the UE starts to monitor for the expected reply from the gNB. Once the last symbol of Msg1 (or Msg3) is transmitted, the UE starts a monitoring timer (e.g., the monitoring window), at the first following symbol of a CORESET where Msg3 (or Msg4) scheduling DCI are expected to be received. The monitoring window duration is RRC configured at the UE. In case a retransmission is needed, the UE receives a DCI 0_0 during the window scheduling a retransmission of Msg3. The monitoring window is restarted after each retransmission.

Multiple PRACH transmissions may be utilized to enhance the coverage of PRACH. In the multiple PRACH transmissions, a UE construct multiple groups of valid ROs. The definition of valid ROs is based on the existing specification, e.g., RO is considered invalid when it partially or fully overlaps with symbol configured as "D" by *tdd-UL-DL-ConfigurationCommon.* Configuring the multiple PRACH transmissions is based on the same framework of a feature combination introduced for multiple features such as Msg 3 repetition. For example, the procedure of multiple PRACH transmissions may be considered as a new preamble feature, and each Msg1 repetition value, (e.g., 2, 4, and/or 8) is treated as a separate preamble feature. The framework is as follows:

(1) In *BWP-UplinkCommon,* a list of *rach-Config-Common-r17* is configured in addition to legacy *rach-ConfigCommon.* A new RRC parameter is used for this purpose *Additional-RACH-ConfigList-r17.*
(2) *rach-ConfigCommon-r17* is exactly as same as *rach-ConfigCommon,* but it additionally includes *featureCominationPreamblesList-r17* associated with this RACH configurations. This means that a gNB can configure the same ROs as the ones used for legacy *rach-ConfigCommon* or separate ones for the feature combinations.
**(3)** The gNB may utilize *featureCominationPreambles* to determine RACH resources to be used for this feature combination from those configured by rach-*ConfigCommon-r17.* Specifically, which ROs (via *ssb-SharedRO-MaskIndex)* and which preambles (via *startPreambleForThisPartition* and *numberOfPreamblesPerSSB-ForThisPartition)* may be indicated.

The number of valid ROs constructing an RO group is determined by the number of Msg1 repetitions which is provided via *Msg1-RepetitionNum-r18* in *featureCominationPreambles.* Because multiple Msg1 repetition values, e.g., 2, 4, or 8, may be configured, the gNB may determine the RSRP level to select a Msg1 repetition value. For example, three RRC parameters may be configured, e.g., *rsrp-ThresholdMsg1-RepetitionNum2-r18, rsrp-ThresholdMsg1-RepetitionNum4-r18, rsrp-ThresholdMsg1-RepetitionNum8-r18* in *BWP-UplinkCommon.* A UE compares RSRP of the downlink pathloss reference versus the configured thresholds for 2, 4 and 8 repetitions. In response to the measured RSRP being less than the threshold for 8 repetitions, then Msg1 with 8 repetitions is applicable, and so on.

Based on the configured number of Msg1 repetitions, a UE constructs multiple RO groups where each RO group comprises of {2, 4, 8} valid ROs to transmit the same select preamble in the first RO in the RO group. The ROs included in an RO group are consecutive in time, use same frequency resources (occupying the same RBs), and are associated with same one or more SS/PBCH block index(es), and each SS/PBCH block index is associated with same preamble index in all valid PRACH occasions within the RO group.

An RO group is determined based on its first valid RO in the group. The first RO in the first RO group is first valid RO in frame 0. The first RO in the subsequent RO group is determined in increasing order in the fre-

quency domain first, then in time domain. The spacing between consecutive RO groups is either back-to-back or spaced by *TimeOffsetBetweenStartingRO* consecutive valid RO.

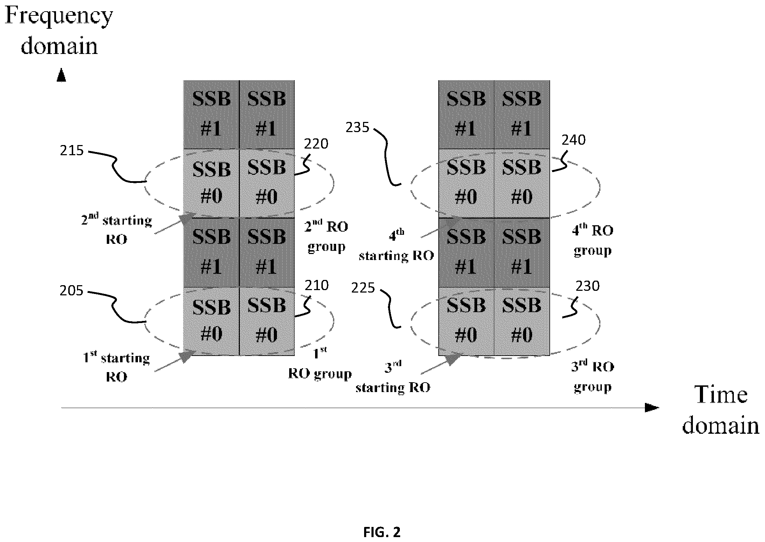

FIG. 2 is a diagram depicting example RO groups, for example, an RO group construction for SSB #0 for two Msg1 repetitions. The first RO (e.g., the first starting RO 205) of a first RO group 210 is determined in frequency domain and time domain, and the first RO (e.g., the second starting RO 215) of the subsequent RO group (e.g., the second RO group 220) is determined in increasing order in frequency domain then in time domain. For example, the first ROs (e.g., the third starting RO 225 and the fourth starting RO 235) of the subsequent RO groups (e.g., the third RO group 230 and the fourth RO group 240) are determined in the next time domain.

In legacy single PRACH transmission, an association pattern period is utilized to simplify the implementation for UE and gNB. For example, the association pattern period includes one or more association periods and is determined, so that the association pattern between PRACH occasions and SS/PBCH block indexes repeats at most every 160 msec. In other words, a UE does not need to know the association between SSB and ROs starting from frame 0 to be able to determine the association between SSB and ROs in later frames. The UE may determine an association pattern period, and the association pattern between SSB and ROs is repeated in each association pattern period.

The concept of the association pattern period may be also applied to Msg1 repetitions where a pattern of RO groups is repeated in each time period. For example, a set of RO group(s) for a configured number of multiple PRACH transmissions is determined within a time period X, starting from frame 0. The determined set of RO groups repeats every time period X. The value of X is the smallest integer number of association pattern periods, such that at least one set of valid PRACH occasions for each of the $N_{\text{Tx}}^{\text{SSB}}$ SS/PBCH block indexes may be determined within the time period for all configured number of preamble repetitions. In other words, if (e.g., when) the UE is configured with multiple repetition values, only a single value (e.g., the value of X) is applied for all configured values.

The number of the actually transmitted Msg1 may be less than the configured repetition number. For example, legacy PRACH dropping rules may be applied, e.g., when PRACH and other UL channels (e.g., PUSCH, PUCCH, and/or SRS) are in the same slot and/or there is no enough gap in the time domain. Additional dropping rules are introduced in Rel-18 to handle the transmission of two PRACHs when there is no enough gap in the time domain. The UE does not transmit the first PRACH repetition and second PRACH repetition when there no enough time gap, unless the UE indicates it may support such feature via capability signaling.

Therefore, in response to a determined set of RO groups being associated with a certain repetition number in SBFD symbols and others in non-SBFD symbols, a method for constructing a set of RO groups and applying additional dropping rules may be needed. Furthermore, there is a need for improving PRACH transmissions in SBFD operation in response to the assessment of Msg3 repetition.

One or more aspects of the present disclosure provide a set/predefined behavior to treat an RO spanning both SBFD symbol and non-SBFD symbol as if it is an RO that is fully confined in one particular symbol type, e.g., RO fully confined in SBFD symbol or in non-SBFD symbol.

Furthermore, one or more aspects of the present disclosure provide a set/predefined rule to be applied for such RO to determine whether it should be treated as an RO that is fully confined in SBFD symbol or in non-SBFD symbol. For example, in response to the first or the last instance of such RO being in SBFD symbol, the RO spanning both SBFD symbol and non-SBFD symbol is treated as if the RO is fully confined in SBFD symbol, instead of in non-SBFD symbol.

Based on configurations, a gNB may indicate to a UE how to treat ROs spanning both SBFD symbol and non-SBFD symbol. This indication may be carried via higher layer signaling, e.g., a RRC parameter, in Remaining Minimum System Information (RMSI), Other System Information (OSI), and/or UE dedicated signaling. For example, in response to the RRC parameter being set to "SBFD", the UE may consider ROs spanning both SBFD symbol and non-SBFD symbol as if it is an RO fully confined in SBFD symbol.

In some embodiments, SBFD symbol may be defined as symbol with subbands, e.g., DL subband(s) and/or UL subband(s), that gNB would use for SBFD operation.

Throughout the present disclosure, a legacy UE may refer to a UE supporting earlier releases of NR, or even Rel-19 and beyond, but the legacy UE is not aware of SBFD configurations.

Regarding the RACH configurations for legacy UEs and SBFD-aware UEs, shared RACH configurations, ROs and preambles between the legacy UEs and the SBFD-aware UEs may be utilized. For example, the legacy UEs are not impacted by the presence of the SBFD-aware UEs as RACH resources are not partitioned. The SBFD-aware UE may utilize SBFD symbol and non-SBFD symbol. For example, the SBFD-aware UE may use the RACH resources in both SBFD symbols and non-SBFD symbols, and alternatively, the SBFD-aware UE may use the RACH resources only in SBFD symbols.

In this scenario, gNB may provide the SBFD-aware UE with the same RACH configuration provided to the legacy UE. An additional offset in the frequency domain or time domain or a different interpretation of legacy RACH configuration parameters, such as *Msg1-FrequencyStart,* may be applied to the ROs in SBFD symbols to ensure that most of them are within UL subband(s).

The SBFD-aware UE may apply different validation rules for ROs in SBFD symbols, in addition to legacy validation rules. For example, an RO that is fully confined within UL subband is a valid RO.

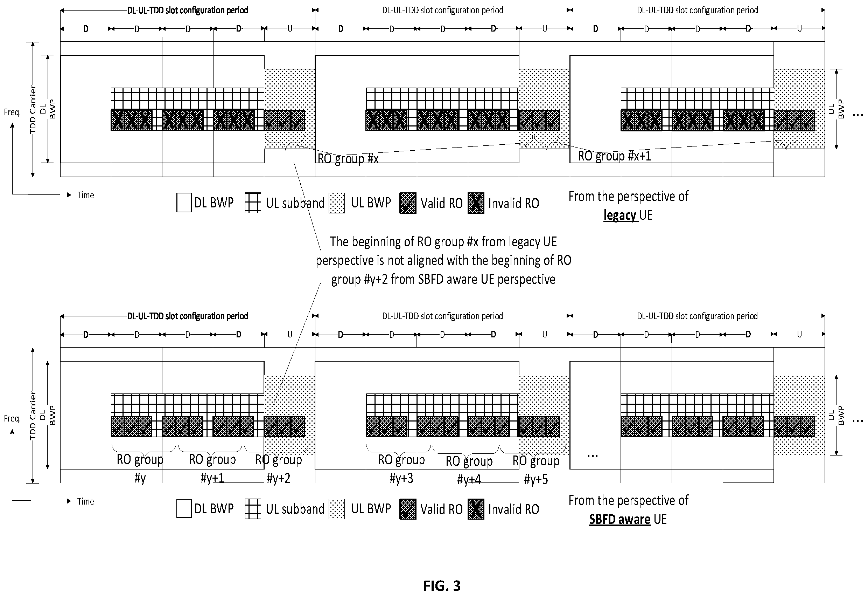

FIG. 3 is a diagram depicting an example RACH configuration being shared between legacy UEs and SBFD-aware UEs, according to some embodiments of the present disclosure.

Enabling the SBFD-aware UE to utilize the RACH resources in both SBFD symbols and non-SBFD symbols may reduce the latency experienced by the SBFD-aware UE and provide the SBFD-aware UE with more RACH resources to enhance the coverage.

For multiple PRACH transmissions, applying legacy approach to construct RO groups may be problematic. In response to an RO group spanning both SBFD symbols and non-SBFD symbols, the gNB may use different antenna configurations causing inefficient receptions of PRACH transmissions. Additionally, the start of the RO groups may not be aligned between the legacy UEs and the SBFD-aware UEs, e.g., the starting points for forming the RO groups are different. This increases the blind detection complexity at the gNB.

Referring to FIG. 3, the number of PRACH transmissions may be set to 4. The legacy UEs identify a different set of valid ROs than the set identified by the SBFD-aware UEs. Consequently, the RO groups constructed by the legacy UEs and the RO groups constructed by the SBFD-aware UEs are not aligned, e.g., group #x for the legacy UEs and group #y+2 for the SBFD-aware UEs. Moreover, some RO groups identified by the SBFD-aware UE span both SBFD symbol and non-SBFD symbol, e.g., group #y+2 and group #y+5.

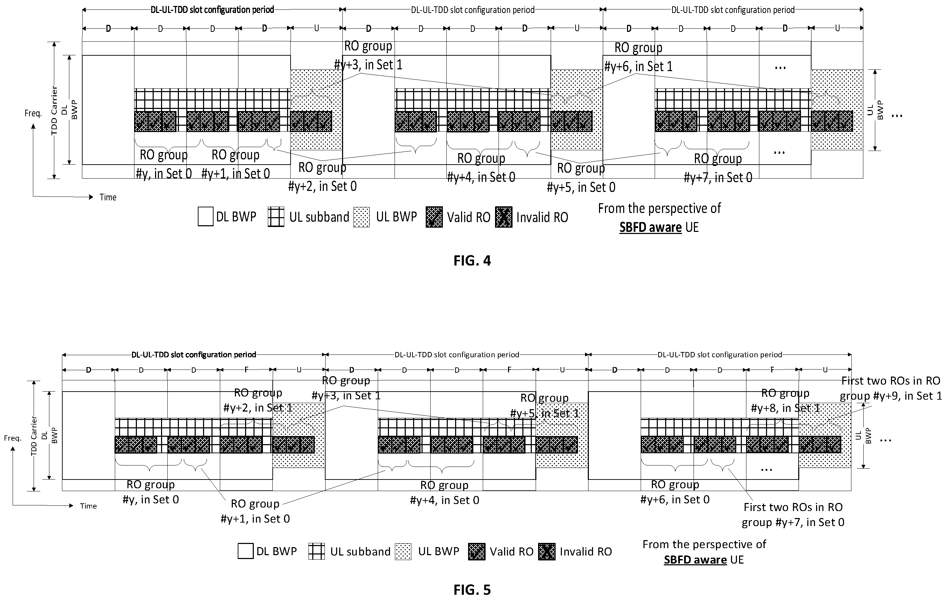

FIG. 4 is a diagram depicting an example method for constructing two sets of RO groups, according to some embodiments of the present disclosure.

To address the issue of RACH configurations being shared among the legacy UEs and the SBFD-aware UEs, the SBFD-aware UE may construct two sets of RO groups in which each set of the RO groups may only include ROs in the same type of symbols, e.g., ROs in SBFD symbol or in non-SBFD symbol. For example, one set of the RO groups may include the ROs that are fully confined in SBFD symbols (i.e., ROs only in SBFD symbols), and another set of the RO groups may include the ROs that are fully confined in non-SBFD symbols (i.e., ROs only in non-SBFD symbols).

Referring to FIG. 4, Set 0 (e.g., a first set of RO groups) may include RO groups constructed by ROs in SBFD symbols. For example, RO group #y+2 in Set 0 includes ROs in SBFD symbols, excluding ROs in non-SBFD symbols. Similarly, Set 1 (e.g., a second set of RO groups) may include RO groups constructed by ROs in non-SBFD symbols. For example, RO group #y+3 in Set 1 includes ROs in non-SBFD symbols, excluding ROs in SBFD symbols.

In one or more embodiments, a SBFD symbol is configured in a symbol configured as downlink by *tdd-UL-DL-ConfigurationCommon.* Consequently, the ROs falling in this SBFD symbol is considered as invalid to the legacy UEs. On the other hand, ROs in SBFD symbols configured as flexible by *tdd-UL-DL-ConfigurationCommon* may be valid for legacy UE.

In one or more embodiments, the SBFD-aware UE may include the ROs in SBFD symbols configured as flexible by *tdd-UL-DL-ConfigurationCommon* in the set of ROs in non-SBFD symbols, e.g., Set 1, which is beneficial to align the boundary of the RO groups between the legacy UEs and the SBFD-aware UEs.

FIG. 5 is a diagram depicting an example UL-DL slot configuration with ROs in SBFD symbol configured as flexible, according to some embodiments of the present disclosure.

A SBFD symbol shown in FIG. 4 may be configured in a symbol configured as downlink by *tdd-UL-DL-ConfigurationCommon.* Consequently, the ROs falling in this SBFD symbol is considered as invalid to the legacy UEs. On the other hand, ROs in SBFD symbols configured as flexible by *tdd-UL-DL-ConfigurationCommon* may be valid for the legacy UE.

In one or more embodiments, the SBFD-aware UE may include the ROs in SBFD symbols configured as flexible by *tdd-UL-DL-ConfigurationCommon* in the set of ROs in non-SBFD symbols, e.g., Set 1 shown in FIG. 5, which is beneficial to align the boundary of the RO groups between the legacy UEs and the SBFD-aware UEs.

Referring to FIG. 5, the UL-DL slot configurations may be provided as DDDFU (e.g., DL, DL, DL, Flexible, and UL) via *tdd-UL-DL-ConfigurationCommon* with some ROs falling in the flexible symbols. The SBFD-aware UE utilizes the ROs in SBFD symbols configured as flexible to constructed RO groups in Set 1 (e.g., RO groups using ROs in non-SBFD symbols). In this case, the SBFD-aware UE utilizes ROs in SBFD symbols configured as downlink via *tdd-UL-DL-ConfigurationCommon* to construct the RO groups in Set 0 (e.g., RO groups using ROs in SBFD symbols). For example, RO groups #y, #y+1, #y+4, #y+6, #y+7, and so on in Set 0 are constructed from valid ROs in SBFD symbols configured as downlink via *tdd-UL-DL-ConfigurationCommon.* On the other hand, RO groups #y+2, #y+3, #y+5, #y+8, #y+9, and so on in Set 1 are constructed from valid ROs in non-SBFD symbols and SBFD symbols configured as flexible via *tdd-UL-DL-ConfigurationCommon.*

Alternatively, the SBFD-aware UE may consider the ROs in SBFD symbols configured as flexible via *tdd-UL-DL-ConfigurationCommon* as if they are the ROs in SBFD symbols configured as downlink via *tdd-UL-DL-ConfigurationCommon.* For example, the SBFD-aware UE does not distinguish between ROs in SBFD symbols that are configured as downlink or flexible via *tdd-UL-DL-ConfigurationCommon.* In this case, the two sets of RO groups may be constructed as shown in FIG. 4. This may be beneficial if (e.g., when) power control parameters separated from legacy power control parameters may be utilized for transmitting PRACH in SBFD symbols configured either in symbols configured as downlink or flexible via *tdd-UL-DL-ConfigurationCommon.*

In some embodiments, two sets of RO groups may be constructed if (e.g., when) ROs are in SBFD symbols configured as "F" by *tdd-UL-DL-ConfigurationCommon.*

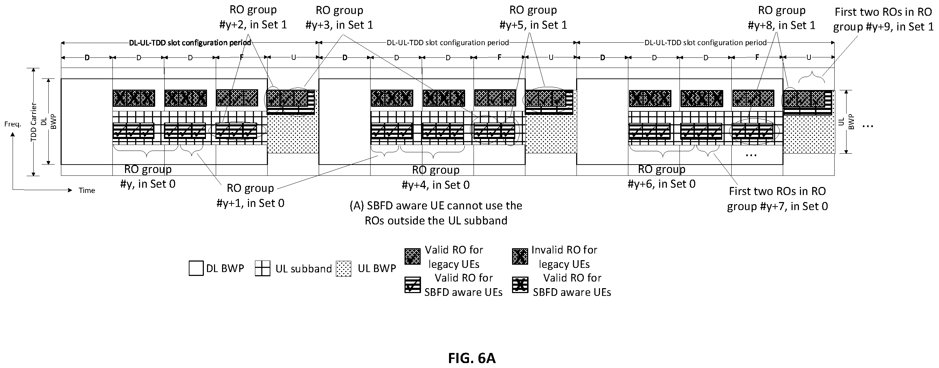

FIG. 6A is a diagram depicting an example method for handling ROs replicas in SBFD symbols configured as flexible, according to some embodiments of the present disclosure.

If (e.g., when) the SBFD-aware UE applies additional offset in the frequency domain or a different interpretation of legacy RACH configuration parameters, such as *Msg1-FrequencyStart,* this may create two valid replicas of ROs in SBFD symbols configured as flexible by *tdd-UL-DL-ConfigurationCommon.* Therefore, it is beneficial to determine how RO groups are constructed. The SBFD-aware UE may include the ROs in SBFD symbols configured as flexible by *tdd-UL-DL-ConfigurationCommon* in the set of ROs in non-SBFD symbols, e.g., Set 1 shown in FIG. 5.

In one or more embodiments, for which ROs replicas in SBFD symbols configured as flexible by *tdd-UL-DL-ConfigurationCommon,* the SBFD-aware UE may only use the RO confined in UL subband. This configuration aligns with the definition of the SBFD symbol where UL transmission is not allowed outside the UL subband. As a result, the RO group may include ROs not occupying the same resource blocks (RBs) as shown in FIG. 6A. For example, RO group #y+2 in FIG. 6A includes three ROs in UL subband and one RO in non-SBFD UL symbol. RO group #y+3 in FIG. 6A includes two ROs in non-SBFD UL symbol and two ROs in UL subband.

In some embodiments, for handling ROs replicas in SBFD symbols configured as flexible by *tdd-UL-DL-ConfigurationCommon,* the SBFD-aware UE may act as the legacy UEs. In other words, this SBFD symbols is considered as non-SBFD symbol and legacy UE's behavior may be applied.

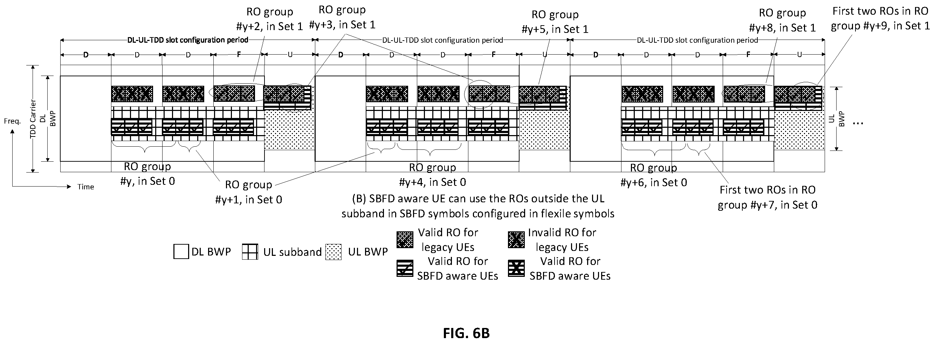

FIG. 6B is diagram depicting an example method for utilizing ROs outside the UL subband, according to some embodiments of the present disclosure. For example, RO group #y+2 includes ROs occupying the same physical resource blocks (PRBs), similar to the legacy UEs.

For the SBFD-aware UE acting as the legacy UE, one or more methods may be provided as follows:

(1) An additional offset to a location of ROs in the frequency domain or a different interpretation of legacy RACH configuration parameters, e.g., such as *Msg1-FrequencyStart,* may only be applied in SBFD symbols configured as downlink by *tdd-UL-DL-ConfigurationCommon.* In other words, the RO offset and the different interpretation may not be applied to the ROs in SBFD symbols configured as flexible by *tdd-UL-DL-ConfigurationCommon*. In effect, the SBFD-aware UE may act as the legacy UE to utilize the ROs in SBFD symbol configured as flexible by *tdd-UL-DL-ConfigurationCommon*. For example, the ROs in SBFD symbol configured as flexible by *tdd-UL-DL-ConfigurationCommon* may fall in downlink subband and considered invalid and may not be utilized by the SBFD-aware UE if (e.g., when) the SBFD-aware UE acts as a SBFD-aware UE. On the other hand, in response to the ROs falling in UL subband, the ROs are valid and may be utilized by the SBFD-aware UE.

(2) The validation rule for the SBFD-aware UE may consider ROs in SBFD symbols configured as flexible by *tdd-UL-DL-ConfigurationCommon* invalid regardless whether they are confined in the UL subband or not. For example, the ROs in SBFD symbol configured as "F(Flexible)" are considered invalid regardless they are in UL subband or not.

Therefore, the SBFD-aware UE may apply the one or more methods described above and/or any combinations of the one or more methods to determine the valid ROs and/or any other procedures (e.g., a dropping rule), and then construct the RO groups based on the valid ROs.

Alternatively, the SBFD-aware UE may consider the ROs in SBFD symbols configured as flexible via *tdd-UL-DL-ConfigurationCommon* as if they are ROs in SBFD symbols configured as downlink via *tdd-UL-DL-ConfigurationCommon*. In other words, the SBFD-aware UE does not distinguish between ROs in SBFD symbols that are configured as downlink or flexible via *tdd-UL-DL-ConfigurationCommon*. The SBFD-aware UE may consider the RO replicas outside the UL subband as invalid. In this case, the two sets of RO groups may be constructed as shown in FIG. 4. This may be beneficial if (e.g., when) power control parameters separated from legacy power control parameters may be used for transmitting PRACH in SBFD symbols configured either in symbols configured as downlink or flexible via *tdd-UL-DL-ConfigurationCommon*.

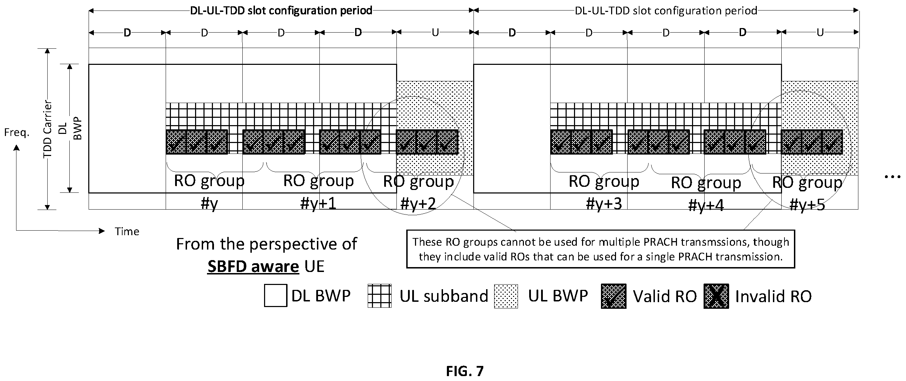

FIG. 7 is a diagram depicting an example method for invalidating an RO group including ROs in both SBFD symbols and non-SBFD symbols, according to some embodiments of the present disclosure.

It may be beneficial to enable a gNB to indicate a UE to construct two sets of RO groups or not. Furthermore, the gNB may also indicate the UE which set of RO groups to be utilized. A set RO groups may include RO groups of valid ROs in SBFD symbols, and the other set may include RO groups of valid ROs in non-SBFD symbols. For example, some gNBs may utilize the same antenna configurations in both SBFD symbols and non-SBFD symbols, and they (e.g., the transmissions via ROs in SBFD symbols and non-SBFD symbols) do not expect reception degradation. Moreover, such gNBs may be able to handle the additional complexity of dealing with non-aligned RO groups between the legacy UEs and the SBFD-aware UEs. To this end, a gNB may provide a UE (e.g., a legacy UE and/a SBFD-aware UE) with an indication via higher layer signaling, e.g., RRC parameter *RO_group_twoSets*. Such RRC parameter may be provided in RMSI, OSI, and/or a dedicated higher layer singling. Upon the absence of such indication, a default behavior may be defined such as two sets of the RO groups are constructed. Moreover, the decision to construct two sets of RO groups (e.g., Set 0 and Set 1) or which set of them to be utilized may be determined based on a threshold. In some embodiments, the threshold may be predefined/set, e.g., defined in the specifications and/or provided via a higher layer signaling, e.g., RMSI, OSI, and/or a UE dedicated RRC signaling. The threshold may be determined/set based on L1-RSRP of the selected Synchronization Signal Block (SSB)/Channel State Information Reference Signal (CSI-RS) for PRACH transmission. For example, if (e.g., when) the SBFD-aware UE is in poor coverage, and measured L1-RSRP is below the provided/determined threshold, the SBFD-aware UE may select RO groups in Set 0 or RO groups in Set 1.

In one or more embodiments, the RO groups may be constructed as in legacy (e.g., following legacy procedures). For example, the RO groups may be constructed without distinguishing between the ROs in SBFD symbol and non-SBFD symbol. In some embodiments, the RO group including ROs in both SBFD symbol and non-SBFD symbol may not be utilized for transmission PRACH repetitions.

Referring to FIG. 7, each of the RO groups may include 4 valid ROs for multiple PRACH transmissions. Some of the RO groups spanning both SBFD symbol and non-SBFD symbol, e.g., RO groups #y+2 and y+5, may not be utilized in multiple PRACH transmission. In some embodiments, in response to the UE deciding to utilize an RO for a single PRACH transmission, any of those ROs may be utilized, for example, RO groups #y+2 and y+5 may be valid for the single PRACH transmission.

Dropping the RO group including at least one RO in SBFD symbol and at least one in non-SBFD symbol may be applied as a new validation rule on the RO group level. For example, an RO group may be considered invalid in response to ROs in the RO group spanning both SBFD symbol and non-SBFD symbol, despite that each RO may be individually valid.

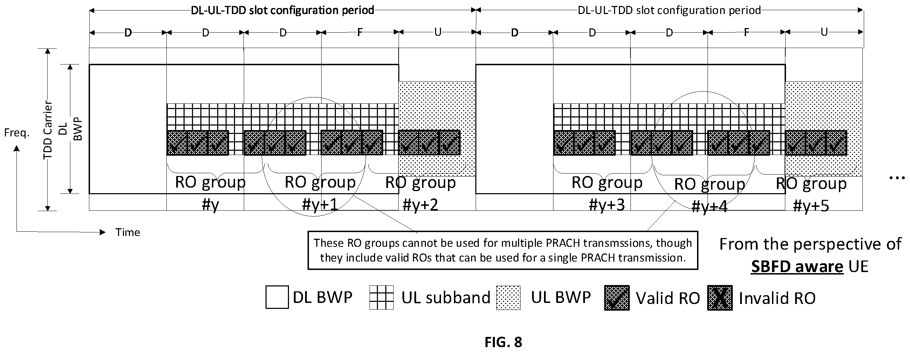

FIG. 8 is a diagram depicting an example method for invalidating an RO group including ROs in SBFD symbols configured as downlink and in SBFD symbols configured as flexible, according to some embodiments of the present disclosure.

An example of four PRACH repetitions with some ROs falling in SBFD symbols configured as flexible is shown in FIG. 8. For example, RO group #y+1 is considered invalid as it includes ROs in SBFD symbols configured as downlink and flexible by *tdd-UL-DL-Con-*

*figurationCommon.*

In one or more embodiments, if (e.g., when) ROs are configured based on SBFD symbol that are configured as flexible by *tdd-UL-DL-ConfigurationCommon,* and the RO group including ROs in SBFD symbol configured as downlink and flexible, the entire RO group may be considered invalid. Because the ROs in SBFD symbol configured as flexible may also be visible to the legacy UEs, the RO group including the ROs in SBFD symbol configured as flexible may be dropped. Additionally, if (e.g., when) the SBFD-aware UE applies an additional offset to a location of ROs in the frequency domain or a different interpretation of legacy RACH configuration parameters, the ROs may be moved to be in the UL subband. In this case, the legacy UEs may utilize the ROs that are in DL subband while the SBFD-aware UE may utilize the replica ROs that are in UL subband. Therefore, the gNB may need to change its antenna configurations if (e.g., when) switching from SBFD symbol configured as downlink to SBFD symbols configured as flexible by *tdd-UL-DL-ConfigurationCommon* to ensure that the performance of the legacy UE would not be negatively affected.

It is beneficial to avoid utilizing RO group including ROs in SBFD symbol configured as downlink and flexible. In response to such RO group being utilized, the gNB's antenna configurations may need to be adjusted cross different PRACH repetitions within the RO group. Furthermore, the constructed RO group by the legacy UE and the SBFD-aware UE may not be aligned.

Alternatively, the SBFD-aware UE may consider the ROs in SBFD symbol configured as flexible via *tdd-UL-DL-ConfigurationCommon* as if they are ROs in SBFD symbols configured as downlink via *tdd-UL-DL-ConfigurationCommon.* In other words, the SBFD-aware UE does not distinguish between ROs in SBFD symbol that are configured as downlink or flexible via *tdd-UL-DL-ConfigurationCommon.* In this case, the RO group including at least one RO in non-SBFD symbol and at least one RO in SBFD symbol is considered invalid, regardless whether the ROs are configured as downlink or flexible, which is similar to the dropping rule described in FIG. 7.

In one or more embodiments, the RO group validation level may be applied when some of the configured RO for the legacy UEs are outside UL subband. For example, the SBFD-aware UE may apply an additional offset to a location of ROs in the frequency domain or a different interpretation of legacy RACH configuration parameters, to move the ROs in the UL subband. Therefore, the method for handling an RO replica in SBFD symbols configured as flexible by *tdd-UL-DL-ConfigurationCommon* for constructing the RO group may applied. For example, one or more methods may be provided as follows:

(1) An additional offset to a location of ROs in the frequency domain or a different interpretation of legacy RACH configuration parameters, may be applied. For example, *Msg1-FrequencyStart* may be applied in SBFD symbols configured as downlink by *tdd-UL-DL-ConfigurationCommon.* In other words, the RO offset and the different interpretation may not be applied to ROs in SBFD symbols configured as flexible by *tdd-UL-DL-ConfigurationCommon.* Effectively, the SBFD-aware UE may act as the legacy UEs to utilize the ROs in SBFD symbols configured as flexible by *tdd-UL-DL-ConfigurationCommon.* For example, the ROs in SBFD symbols configured as flexible by *tdd-UL-DL-ConfigurationCommon may* fall in downlink subband and considered invalid and may not be utilized by the SBFD-aware UE if (e.g., when) the SBFD-aware UE acts as a SBFD-aware UE. In some embodiments, if (e.g., when) ROs fall in UL subband, the ROs may be valid and may be utilized by the SBFD-aware UE.

(2) The validation rule for the SBFD-aware UE may invalidate ROs in SBFD symbols configured as flexible by *tdd-UL-DL-ConfigurationCommon* regardless whether they are confined in the UL subband or not. For example, ROs in SBFD symbols configured as "F(Flexible)" are considered invalid regardless they are in UL subband or not.

Therefore, the SBFD-aware UE may apply of the one or more methods described above and/or any combinations of the one or more methods to determine the valid ROs and/or any other procedures, and then construct the RO groups based on valid ROs.

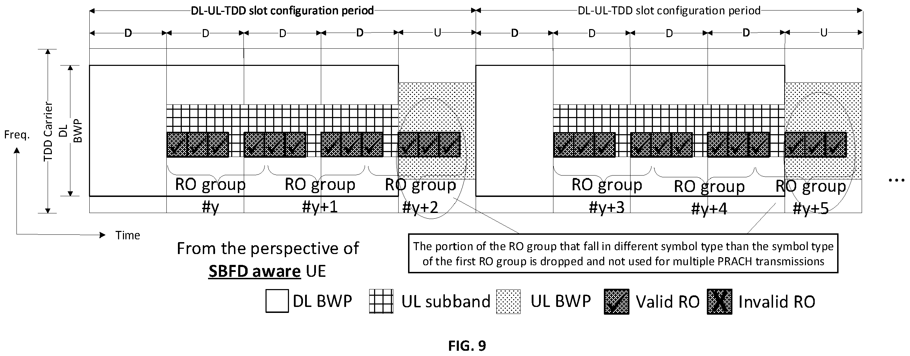

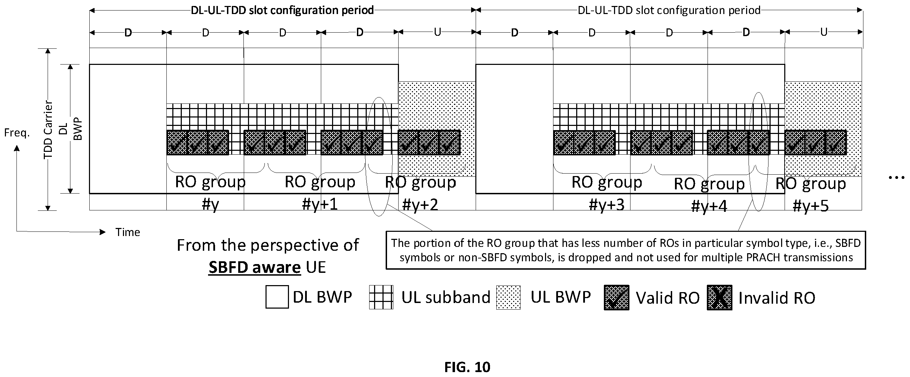

FIG. 9 is a diagram depicting an example method for dropping RO(s) in a symbol type different than the symbol type of the first RO within an RO group, according to some embodiments of the present disclosure. FIG. 10 is a diagram depicting an example method for dropping RO(s) in a first type of symbol having less number than RO(s) in a second type of symbol, according to some embodiments of the present disclosure.

In one or more embodiments, the RO groups may be constructed as in legacy (e.g., following legacy procedures). For example, the RO groups may be constructed without distinguishing between the ROs in SBFD symbol and non-SBFD symbol. In some embodiments, only the RO groups including ROs in the same symbol (e.g., either in SBFD symbol or non-SBFD symbol) may be utilized for multiple PRACH transmissions. In this case, some ROs within the RO group are dropped, even if they are valid for single PRACH transmission. In some embodiments, a predefined/set rule (e.g., dropping a portion of RO(s) in an RO group including at least one RO in SBFD symbol and at least one RO in non-SBFD symbol) may be utilized to determine which portion of the RO group is utilized and which portion of the RO group is dropped (e.g., dropping RO(s) in SBFD symbol or dropping RO(s) in non-SBFD symbol). For example, a portion of RO(s) in an RO group that contains the first RO with the RO group (e.g., the portion of RO(s) in the same type of symbol), is utilized, the remaining RO(s) within the RO group is dropped. Namely, if (e.g., when) ROs in non-SBFD symbol within the RO group are utilized, ROs in SBFD symbol within the RO group will be dropped. Likewise, if (e.g., when) ROs in SBFD symbol within the RO group are utilized, ROs in non-SBFD symbol within the RO group will be dropped.

Additional dropping rule for the above predefined/set rule is to utilize a portion of the RO group that has more ROs in same symbols type, e.g., SBFD symbols or non-SBFD symbols. For example, if (e.g., when) there are three ROs in SBFD symbol and one RO in non-SBFD symbol within an RO group, the RO in non-SBFD symbol within the RO group will be dropped. Alternatively, which RO(s) to be dropped within the RO group may depend on the kind of symbol, e.g., if (e.g., when) an RO group includes ROs in SBFD symbols and non-SBFD symbols, the ROs in non-SBFD symbols are dropped. In some embodiments, the gNB may configure which portion of the ROs to be dropped via a higher layer signaling.

It is beneficial to enable a gNB to indicate a UE whether or not to consider (e.g., utilize) an RO group including at least one RO in SBFD symbol and at least one non-SBFD symbol or an RO group including at least one RO in SBFD symbols configured as downlink and/or flexible by *tdd-UL-DL-ConfigurationCommon* as valid. For example, some gNBs may utilize the same antenna configurations in SBFD symbol and non-SBFD symbol, and they do not expect reception degradation. Moreover, such gNBs may be able to handle the additional complexity of dealing with non-aligned RO groups between the legacy UE and the SBFD-aware UE. To this end, the gNB may provide the UE (e.g., the legacy UE and the SBFD-aware UE) with such indication via a higher layer signaling, e.g., RRC parameter *RO_group_valid_SBFD_nonSBFD.* Such RRC parameter may be provided in RMSI, OSI, and/or a dedicated higher layer singling. Upon the absence of such indication, a default behavior may be defined, such as the RO group is considered invalid if (e.g., when) the RO group includes at least one RO in SBFD symbol and at least one RO in non-SBFD symbol. Moreover, the decision may be based on a threshold that may be predefined/set, e.g., defined in the specifications and/or provided via a higher layer signaling, e.g., RMSI, OSI, and/or a UE dedicated RRC signaling. The threshold may be based on L1-RSRP of a selected SSB/CSI-RS for PRACH transmission. For example, if (e.g., when) the SBFD-aware UE is in poor coverage, and measured L1-RSRP is below the provided/determined threshold, the SBFD-aware UE may validate/invalidate the RO group spanning SBFD symbol and non-SBFD symbol.

Referring to FIG. 9, an example of RO groups including 4 valid ROs for multiple PRACH transmissions. In FIG. 9, the RO groups including valid ROs in SBFD symbol and non-symbol are modified by dropping the ROs in a type of symbol different from the type of symbol of the first RO in the RO group. For example, if (e.g., when) the first RO in the RO group is in SBFD symbol, the RO(s) in non-SBFD symbol will be dropped. Therefore, for RO groups #y+2 and y+5, only the first RO is utilized. On the other hand, referring to FIG. 10, the usable portion of the RO group spanning SBFD symbols and non-SBFD symbols is determined based on which portion having more ROs. For example, the first RO in RO groups #y+2 and y+5 is in SBFD symbol, however the number of RO(s) in SBFD symbol is less than the number of RO(s) in non-SBFD symbol, therefore, the RO in SBFD symbol (e.g., the first RO) is dropped, and the ROs in non-SBFD symbols are utilized.

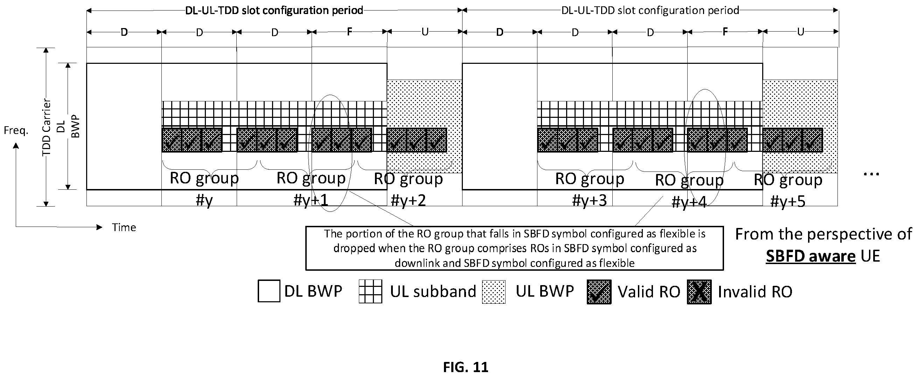

FIG. 11 is diagram depicting an example method for dropping ROs in SBFD symbol configured as flexible within an RO group including ROs in SBFD symbol configured as downlink and flexible, according to some embodiments of present disclosure.

If (e.g., when) ROs are in SBFD symbols configured as flexible by *tdd-UL-DL-ConfigurationCommon,* the RO group including ROs in SBFD symbol configured as downlink and flexible may also be divided into portion. For example, one portion for ROs in SBFD symbols is configured as downlink by *tdd-UL-DL-Configuration-Common,* and the other portion for ROs in SBFD symbols is configured as flexible by *tdd-UL-DL-Configuration-Common.* The ROs in SBFD symbol configured as flexible are visible to the legacy UEs. Therefore, the gNB may need to change its antenna configurations when switching from RO(s) in SBFD symbols configured as downlink to RO(s) in SBFD symbols configured as flexible *by tdd-UL-DL-ConfigurationCommon* to ensure the performance of the legacy UEs will not be negatively affected. In this case, the SBFD-aware UE may drop one of the portions utilizing any of the dropping rules described as above.

Referring to FIG. 11, an example of four PRACH repetitions with some ROs falling in SBFD symbols configured as flexible is shown. In this case, RO groups #y+1 and y+4 include ROs in SBFD symbols configured as downlink and flexible by *tdd-UL-DL-ConfigurationCommon.* In this case, SBFD-aware UE may drop the ROs in SBFD symbols configured as flexible within these RO groups.

It is beneficial to avoid utilizing an RO group including at least one RO in SBFD symbol configured as downlink and at least one RO in SBFD symbol configured as flexible. Because in response to such RO group, the gNB's antenna configurations may need to be adjusted across different PRACH repetitions within the RO group. On top of that, the constructed RO group by the legacy UEs and the SBFD-aware UEs may not be aligned.

Alternatively, the SBFD-aware UE may consider the ROs in SBFD symbols configured as flexible via *tdd-UL-DL-ConfigurationCommon* as if they are ROs in SBFD symbols configured as downlink via *tdd-UL-DL-ConfigurationCommon.* In other words, the SBFD-aware UE does not distinguish between ROs in SBFD symbols that are configured as downlink or flexible via *tdd-UL-DL-ConfigurationCommon.* In this case, the dropping rule may be applied RO group including ROs in non-SBFD symbol and SBFD symbol (regardless of whether they are configured as downlink or flexible), which is similar to the dropping rules described in FIG. 9 and FIG. 10.

In one or more embodiments, the above dropping rules for ROs within RO group are applied if (e.g., when) the configured ROs for legacy UEs are confined within UL subband for the SBFD-aware UE, they may be extended to the case that RO outside the UL subband. For example, the SBFD-aware UE may apply an additional offset to a location of ROs in the frequency domain or a different interpretation of legacy RACH configuration parameters, to move the ROs in the UL subband. Therefore, one or more methods for handling an RO replica in SBFD symbols configured as flexible by *tdd-UL-DL-Configuration Common* may be provided as follows:

(1) An additional offset to a location of ROs in the frequency domain or a different interpretation of legacy RACH configuration parameters may be applied, such as *Msg1-FrequencyStart* may only be applied in SBFD symbols configured as downlink by *tdd-UL-DL-ConfigurationCommon.* In other words, the RO offset and the different interpretation may not be applied to ROs in SBFD symbols configured as flexible by *tdd-UL-DL-ConfigurationCommon.* Effectively, the SBFD-aware UE may act as the legacy UE to utilize the ROs in SBFD symbol configured as flexible by *tdd-UL-DL-ConfigurationCommon.* For example, the ROs in SBFD symbol configured as flexible by *tdd-UL-DL-ConfigurationCommon* may fall in downlink subband and considered invalid and may not be utilized by the SBFD-aware UE if (e.g., when) the SBFD-aware UE acts as a SBFD-aware UE. On the other hand, if (e.g., when) ROs fall in UL subband, the ROs are valid and may be utilized by the SBFD-aware UE.

(2) The validation rule for the SBFD-aware UE may consider ROs in SBFD symbols configured as flexible by *tdd-UL-DL-ConfigurationCommon* invalid regardless whether they are confined in the UL subband or not. For example, the ROs in SBFD symbol configured as "F(Flexible)" are considered invalid regardless they are in UL subband or not.

Therefore, the SBFD-aware UE may apply the one or more methods described above and/or any combinations of the one or more methods to determine the valid ROs or any other procedures (e.g., a dropping rule), and then construct the RO groups based on the valid ROs.

Enabling a gNB to indicate to a UE whether or not to apply partial dropping rules to an RO group including ROs in SBFD symbol and non-SBFD symbol or an RO group including ROs in SBFD symbol configured as downlink and flexible by *tdd-UL-DL-ConfigurationCommon* may be beneficial. For example, some gNBs may utilize the same antenna configurations in SBFD symbols and non-SBFD symbols and do not expect reception degradation. Moreover, such gNBs may be able to handle the additional complexity of dealing with non-aligned RO groups between the legacy UE and the SBFD-aware UE. To this end, the gNB may provide the UE (e.g., the legacy UE and/or the SBFD-aware UE) with such indication (e.g., indicating the UE to apply partial dropping rules or not) via a higher layer signaling, e.g., RRC parameter *RO_group_partialdropping_SBFD_nonSBFD.* Such RRC parameter may be provided in RMSI, OSI, and/or a dedicated higher layer singling. Upon the absence of such indication, a default behavior may be defined such as the partial RO group dropping is applied if (e.g., when) an RO group includes ROs in SBFD symbol and non-SBFD symbol. Moreover, the decision may be based on a threshold that may be predefined/set, e.g., defined in the specifications and/or provided via a higher layer signaling, e.g., RMSI, OSI, and/or a UE dedicated RRC signaling. The threshold may be based on L1-RSRP of the selected SSB/CSI-RS for PRACH transmission. For example, if (e.g., when) the SBFD-aware UE is in poor coverage, and measured L1-RSRP is below the predefined/set threshold, the SBFD-aware UE may or may not perform partial dropping of some ROs in the RO group.

To provide the gNB with more flexibility, the gNB may indicate which portion of the RO group to be dropped. In some embodiments, the gNB may indicate the UE via a higher layer signaling a portion of ROs with the same type as the first RO in the RO group to be dropped or the other portion to be dropped. For example, if (e.g., when) the first RO in the RO group is an RO in SBFD symbol, the gNB may indicate the UE to drop the portion of ROs in SBFD symbol or to drop the portion of ROs in non-SBFD symbol in the RO group. In some embodiments, the gNB may indicate the UE via a higher layer signaling that a portion including more ROs with the same type in the RO group is dropped or the other portion to be dropped. For example, if (e.g., when) there are three ROs in SBFD symbol and one RO in non-SBFD symbol within an RO group, the gNB may indicate the UE to drop the ROs in SBFD symbol (e.g., a portion including more ROs with the same type in the RO group), or to drop the RO in non-SBFD symbol (e.g., the other portion in the RO group).

An additional dropping rule may be applied to utilize a portion of RO(s) corresponding to either SBFD symbol or non-SBFD symbol, and which portion to be utilized may also be a gNB indication or included in the gNB indication via a higher layer signaling provided in RMSI, OSI, and/or a UE dedicated signaling. Utilizing only the RO(s) in SBFD symbol may make a gNB blind detection easier compared with utilizing the RO(s) in non-SBFD symbol as the RO (s) in non-SBFD symbol may be shared with the legacy UE(s).

In one or more embodiments, invalidating the RO group spanning SBFD symbol and non-SBFD symbol and/or dropping some ROs within the RO group may be applied if (e.g., when) Frequency Division Multiplexed (FDMed) ROs are not configured. Alternatively, an RO group may be constructed if (e.g., when) the valid ROs in SBFD symbols and the valid ROs in non-SBFD symbols with the same frequency resource index occupying different RBs, and the aforementioned embodiments for invalidating the RO group or partially dropping of some ROs within the RO group may be applied if (e.g., when) the RO group includes ROs spanning both SBFD symbol and non-SBFD symbol.

If (e.g., when) ROs are configured in SBFD symbol configured as flexible by *tdd-UL-DL-ConfigurationCommon,* the SBFD-aware UE may apply an additional offset to a location of ROs in the frequency domain or a different interpretation of legacy RACH configuration parameters, to move the ROs in the UL subband. In this case, the legacy ROs may fall in DL subband. To avoid any negative impact to the legacy UEs, the gNB may be able to receive the PRACH transmission, e.g., receiving via RO (s) in DL subband and in SBFD symbol configured as flexible by *tdd-UL-DL-ConfigurationCommon.* In other words, the gNB may switch from the SBFD operation to the legacy TDD operation and only perform UL reception in this symbol (e.g., the RO(s) in the DL subband and in SBFD symbol configured as flexible). In this case, one or more methods may be provided for the SBFD-aware UE as follows:

> (1) The SBFD-aware UE may only transmit the UL transmission in the UL subband, regardless the collision handling rules applied to RO(s) in other SBFD symbols and not in the DL subband. The SBFD-aware UE may act as if the UL transmission is restricted to only be in the UL subband. For example, a UL Resource Block Group (RBG) crossing the UL subband may be partial RBG having a number of RBs less than the remaining RBs in the UL RBG.
> (2) The SBFD-aware UE may transmit the UL transmission in the entire UL Bandwidth Part (BWP), including BWP outside the UL subband. In other words, the SBFD-aware UE may switch to the legacy TDD operation.

In response to the gNB switching from the SBFD operation to the legacy TDD operation, the one or more methods described above and/or any combinations of the one or more methods may be applied.

Under the shared configurations between the legacy UE and the SBFD-aware UE, an additional restriction may be applied to the SBFD-aware UE to avoid any impact on the legacy UE. For example, the SBFD-aware UE may not be allowed to utilize ROs in non-SBFD symbol, e.g., considering the ROs in non-SBFD symbol as invalid ROs. In this case, RO groups are constructed from valid ROs in SBFD symbols only.

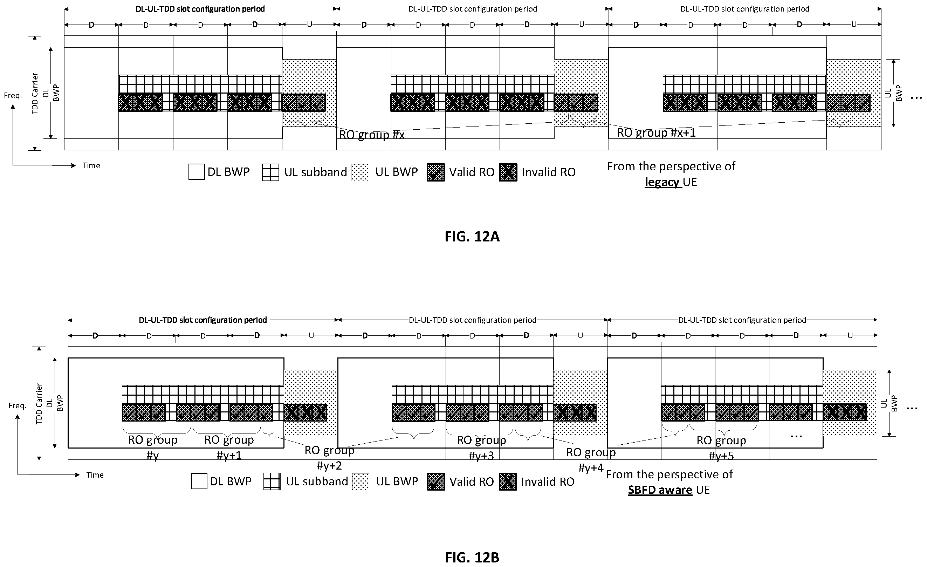

FIG. 12A is a diagram depicting an example shared RO configuration for the legacy UE, according to some embodiments of the present disclosure. FIG. 12B is a diagram depicting an example shared RO configuration for the SBFD-aware UE, according to some embodiments of the represent disclosure.

FIGS. 12A and 12B show example RO configurations shared between the legacy UE and the SBFD-aware UE. In the example RO configurations, the RO group is constructed based on valid ROs from their own perspectives (e.g., the SBFD-aware UE and the legacy UE construct their RO groups respectively). The number of RACH transmission is set to 4. If (e.g., when) the SBFD-aware UE is not allowed to utilize the ROs in non-SBFD symbols, those ROs (e.g., the ROs in non-SBFD symbols) are considered invalid for either a single PRACH transmission or multiple PRACH transmissions. Then, the SBFD-aware UE constructs the RO groups following the legacy rules based on the valid ROs (e.g., ROs in SBFD symbols).

In one or more embodiments, without considering whether the SBFD-aware UE is allowed to utilize ROs in non-SBFD symbols or not, the SBFD-aware UE may select whether it should be treated as a legacy UE or a SBFD-aware UE. Referring to FIG. 3, the SBFD-aware UE may select to construct the RO groups similar to the legacy UE, or the SBFD-aware UE may construct the RO groups similar to other SBFD-aware UEs. Similarly, for constructing the RO groups, the SBFD-aware UE may select to apply the enhancements disclosed in FIG. 3, or apply the same procedures as the legacy UE. In this case, one or more methods and a combination of the one or more methods may be applied for the SBFD-aware UE as follows:

> (1) The SBFD-aware UE may always act as a SBFD-aware UE and may not act as a legacy UE. For example, the SBFD-aware UE may apply all the restrictions imposed on a SBFD-aware UE. For example, if (e.g, when) the SBFD-aware UE constructs two sets of RO groups (e.g., a set of RO groups only including ROs in SBFD symbol, and another set of RO groups only including ROs in non-SBFD symbol), as the rule disclosed in FIG. 4, the SBFD-aware UE has to apply it (e.g., acting as a SBFD-aware UE) and cannot construct RO groups similar to a legacy UE.
> (2) The SBFD-aware UE may select whether it acts as other SBFD-aware UEs or a legacy UE. For example, if (e.g., when) the validation rule on the RO group level, e.g., the rule disclosed in FIG. 7, the SBFD-aware UE may select whether to apply this rule as a SBFD-aware UE, or construct the RO group similar to a legacy UE. Such decision (e.g., acting as a SBFD-aware UE or a legacy UE) may be determined based on one or a combination of the following conditions:

>> 1. The decision may be determined based on internal criteria of the UE implementation, such as which behavior results in earlier accomplishment of multiple PRACH transmission. In some embodiments, the gNB may enable/disable the decision via a higher layer signaling, e.g., RMSI, OSI, and/or a UE dedicated RRC signaling. Upon an absence of a corresponding configuration, a default behavior is defined as acting as a SBFD-aware UE.

2. Based on a predefined/set threshold, e.g., a threshold defined in the specifications and/or provided via a higher layer signaling, e.g., RMSI, OSI, and/or a UE dedicated RRC signaling. The threshold may be set based on L1-RSRP of the selected SSB and/or CSI-RS for PRACH transmission. For example, if (e.g., when) the SBFD-aware UE is in poor coverage, and measured L1-RSRP is below the predefined/set threshold, the SBFD-aware UE may act as a SBFD-aware UE and apply the corresponding restriction and actions as disclosed herein.

In one or more embodiments, if (e.g., when) the SBFD-aware UE constructs two sets of RO groups, e.g., a set of RO groups including valid ROs in SBFD symbols, denoted as Set 0 and another set of RO groups including valid ROs in non-SBFD symbols, denoted as Set 1, it may be beneficial for the gNB to indicate which set of RO groups to be utilized. To this end, one or more methods or a combination of the one or more methods for determining how the SBFD-aware UE acts, e.g., a legacy UE or a SBFD-aware UE, may be applied. The one or more methods may be provided as follows:

(1) The SBFD-aware UE may always utilize the RO groups in Set 0, e.g., the RO groups including ROs in SBFD symbol, and cannot utilize the RO groups in Set 1, e.g., the RO groups including ROs in non-SBFD symbol.

(2) The SBFD-aware UE may select whether to utilize the RO groups in Set 0 or the RO groups in Set 1. Such decision may be determined based on one or a combination of the following conditions:

1. The decision may be determined based on internal criteria of the UE implementation, such as which behavior results in earlier accomplishment of multiple PRACH transmissions. In some embodiments, the gNB may enable/disable the decision via a higher layer signaling, e.g., RMSI, OSI, and/or a UE dedicated RRC signaling. Upon an absence of a corresponding configuration, a default behavior is defined as utilizing the RO groups in Set 0.

2. Based on a predefined/set threshold, e.g., a threshold defined in the specifications and/or provided via a higher layer signaling, e.g., RMSI, OSI, and/or a UE dedicated RRC signaling. The threshold may be set based on L1-RSRP of the selected SSB and/or CSI-RS for PRACH transmission. For example, if (e.g., when) the SBFD-aware UE is in poor coverage, and measured L1-RSRP is below the predefined/set threshold, the SBFD-aware UE may utilize the RO groups in Set 0.

For PRACH retransmission, it may be beneficial to have consistency between the initial PRACH transmission and the subsequent retransmissions. For example, if a SBFD-aware UE chooses to act as a legacy UE for the initial PRACH transmission, the SBFD-aware UE is expected to act as a legacy UE for the subsequent retransmissions. Similarly, if (e.g., when) multiple sets of RO groups are introduced, the SBFD-aware UE is expected to select the same set of RO groups for both the initial transmission and the subsequent retransmissions. Utilizing the same set of RO groups and/or acting the same way in both the initial transmission and the subsequent retransmissions may avoid applying different power control parameters for PRACH transmission in SBFD symbol and non-SBFD symbol, e.g., a different target power and/or power ramping step, and thus simplify the power control procedure.

In some embodiments, providing the flexibility between the initial PRACH transmission and the subsequent retransmissions may also be beneficial to reduce latency. For example, if the SBFD-aware UE chooses to act as a legacy UE for the initial PRACH transmission, the SBFD-aware UE may choose to act as a SBFD-aware UE in the subsequent retransmissions. Similarly, if (e.g., when) multiple sets of RO groups are introduced, the SBFD-aware UE may choose a particular set of RO groups in the initial PRACH transmission and choose another set of RO groups for the subsequent retransmissions. In this case, the same power control parameter(s) may be applied for PRACH transmission in both SBFD symbol and non-SBFD symbol. Therefore, if (e.g., when) a single set of power control parameters is provided for PRACH transmission in SBFD symbol and non-SBFD symbol, the UE is not required to ensure consistency between the initial PRACH transmission and the subsequent retransmissions. In some embodiments, the gNB may indicate to the UE whether consistency should be ensured between the initial PRACH transmission and the subsequent retransmissions via a higher layer signaling, e.g., a new RRC parameter that may be carried in RSMI, OSI, and/or UE dedicated RRC configurations.

In one or more embodiments, even the RACH configurations may be shared, e.g., the configurations of ROs and preambles, between a legacy UE and a SBFD-aware UE, some of the shared RACH parameters may be modified.

The number of multiple PRACH transmission for a SBFD-aware UE may be different from the corresponding number for a legacy UE, *msg1-RepetitionNum-r18.* To enhance the coverage, the SBFD-aware UE may need more repetition compared with the legacy UE. The gNB may provide the SBFD-aware UE with an additional value, e.g. *msg1-RepetitionNum-SBFD,* to be applied if (e.g., when) the SBFD-aware UE acts as a SBFD-aware UE, not as a legacy UE.

The SBFD-aware UE may apply different threshold values for determining the number of repetitions compared with the legacy UE which applies *rsrp-ThresholdMsg1-RepetitionNum2, rsrp-ThresholdMsg1-RepetitionNum4,* and/or *rsrp-ThresholdMsg1-RepetitionNum8.* The gNB may provide SBFD-aware UE with an additional value, e.g. *rsrp-ThresholdMsg1-RepetitionNum2-SBFD, rsrp-ThresholdMsg1-RepetitionNum4-SBFD,* and/or *rsrp-ThresholdMsg1-RepetitionNum8-SBFD,* to be applied if (e.g., when) the SBFD-aware UE acts as a SBFD-aware UE, not as a legacy UE.

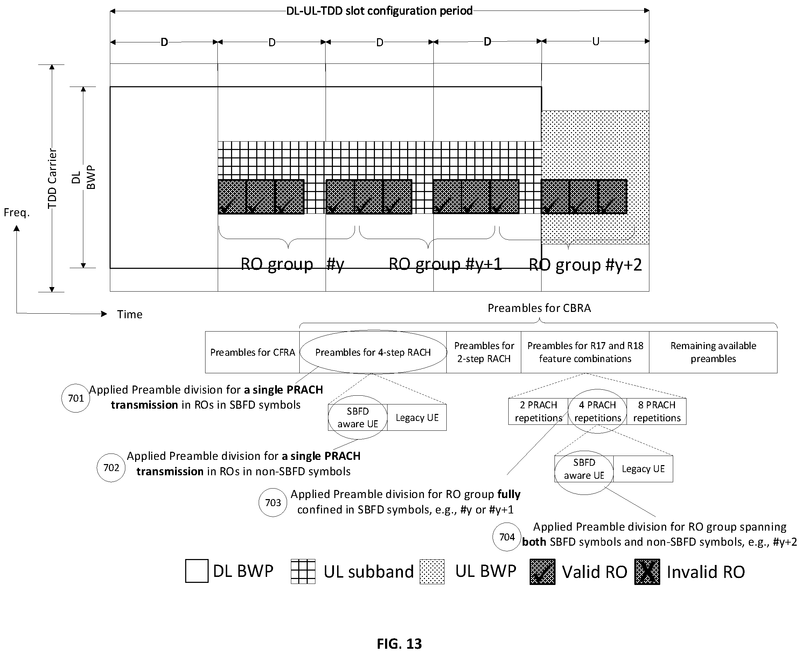

FIG. 13 is a diagram depicting an example preamble partitioning between a SBFD-aware UE and a legacy UE, according to some embodiments of the present disclosure.

FIG. 13 shows an example of only sharing the RO configurations between the SBFD-aware UE and the legacy UE, while separate preambles are configured for the SBFD-aware UE and the legacy UE, respectively. It may be beneficial in the SBFD operation as the gNB may be able to distinguish between the SBFD-aware UE and the legacy UE.

Therefore, dedicating some preambles for the SBFD-aware UE in the ROs that are shared between the legacy UE and the SBFD-aware UE may be able to be applied to single PRACH transmission. For example, ROs in non-SBFD symbol may be utilized by both the SBFD-aware UE and the legacy UE, and therefore, assigning some preambles for the SBFD-aware UE is beneficial in these occasions (e.g., single PRACH transmission). In some embodiments, for ROs in SBFD symbol, dedicating preambles for ROs in SBFD symbols may not be needed. Therefore, the SBFD-aware UE may apply the preamble partitioning only for the ROs shared with the legacy UE, e.g., ROs in non-SBFD symbol and/or ROs in SBFD symbol configured in flexible symbols based on *tdd-UL-DL-ConfigurationCommon.* On the other hand, no preamble partitioning is applied in ROs that are not shared with the legacy UE, e.g., ROs in SBFD symbol configured in downlink symbol based on *tdd-UL-DL-ConfigurationCommon.*

For constructing RO groups, assuming the SBFD-aware UE may utilize ROs in non-SBFD symbols, applying legacy rules may result in excluding the ROs in non-SBFD symbol. The reason is that for the legacy UE during multiple PRACH transmissions, the RO groups including valid ROs associated with the same SSB index and each SSB index associated with same preamble are in all valid PRACH occasions within the RO group.

For constructing an RO group which is allowed to include ROs in SBFD symbol and ROs in non-SBFD symbols, a SBFD-aware UE may assume that the same preamble partitioning is applied to the ROs in SBFD symbols similar to the ROs in non-SBFD symbols. On the other hand, for a single PRACH transmission, no preamble partitioning is applied to ROs in SBFD symbols.

FIG. 13 shows an example of PRACH preamble partitioning which is based on the PRACH repetitions, the RO group including only ROs in SBFD symbol or non-SBFD symbol, and/or a single PRACH transmission in the ROs in SBFD symbol or non-SBFD symbol. In a first scenario 701, if (e.g., when) a SBFD-aware UE transmits a single PRACH in an RO in SBFD symbol, the preamble is chosen from any preamble lined to the selected SSB. In a second scenario 702, if (e.g., when) a SBFD-aware UE transmits a single PRACH in an RO in non-SBFD symbol, the preamble partitioning between the legacy UE and the SBFD-aware UE is applied, and the preamble is selected from among the portion of the SBFD-aware UE. In a third scenario 703, if (e.g., when) a SBFD-aware UE transmits multiple PRACH transmissions in an RO group fully confined within SBFD symbols (e.g., an RO group including ROs in SBFD symbol), the preamble is selected from among those preambles allocated for 4 PRACH repetitions, without additional partitioning for the SBFD-aware UE and the legacy UE. In a fourth scenario 704, if (e.g., when) a SBFD-aware UE transmits multiple PRACH transmissions in an RO group fully confined within non-SBFD symbols or spanning both SBFD and non-SBFD symbols, the preamble is selected from among preambles allocated for 4 PRACH repetitions for the SBFD-aware UE.

Therefore, a legacy rule on the RO group may be modified to reflect the aforementioned procedure, e.g., the RO group including valid ROs associated with the same SSB index and each SSB index associated with same preamble index in all valid PRACH occasions within the RO group. For example, the first RO in RO group #y+2 in FIG. 13 may be considered to have all the preambles for 4-step RACH as in the first scenario 701. However, for constructing the RO groups, the preamble partitioning may be applied to the remaining ROs in RO group #y+2.

Similar to the case in which ROs and preambles are shared, the SBFD-aware UE may choose to act as a legacy UE or a SBFD-aware UE. The aforementioned methods for determining whether the SBFD-aware UE acts as a legacy UE or not may be applied.

Furthermore, similar to the case in which ROs and preambles are shared, some of the shared parameters may be modified, such as the RSRP threshold for determining the number of repetitions, or the SBFD-aware UE may be provided with a different number of repetitions than the number configured for the legacy UE.

It may be beneficial to enable a gNB to indicate to a UE whether or not the preamble partitioning is applied to an RO group including ROs in SBFD symbol and non-SBFD symbol. For example, some gNBs may utilize the same antenna configurations in SBFD symbols and non-SBFD symbols, and such gNBs do not expect reception degradation. Moreover, such gNBs may be configured to handle the additional complexity of dealing with non-aligned RO groups between the legacy UE and the SBFD-aware UE. To this end, the absence of how preambles to be partitioned, e.g., starting preamble and the number of preambles, may indicate that no preamble partitioning is applied. Alternatively, the partitioning information may be provided, but the decision to apply the partitioning information or not may be based on a threshold that may be predefined/set, e.g., defined in the specifications and/or provided via a higher layer signaling, e.g., RMSI, OSI, and/or a UE dedicated RRC signaling. The threshold may be based on L1-RSRP of the selected SSB/CSI-RS for PRACH transmission. For example, if (e.g., when) the SBFD-aware UE is in poor coverage, and measured L1-RSRP is below the predefined/set threshold, the SBFD-aware UE may or may not apply the preamble partitioning configurations.

In one or more embodiments, the above methods for applying preamble partitioning between the SBFD-aware UE and the legacy UE in the shared ROs in non-SBFD symbol may also be applied to a scenario that ROs are shared between the legacy UE and the SBFD-aware UE in SBFD symbol configured as flexible by *tdd-UL-DL-ConfigurationCommon.*

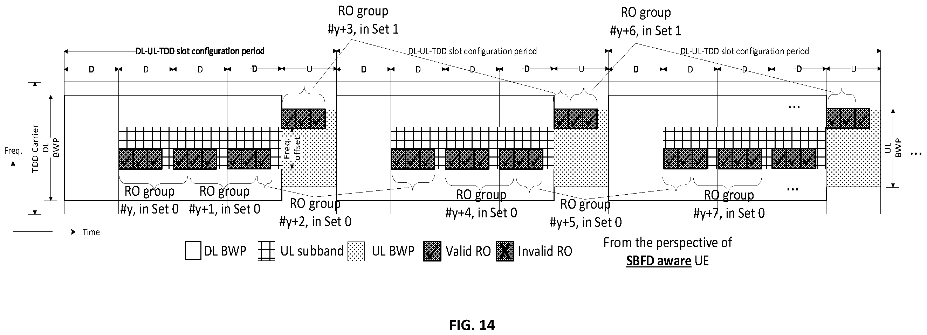

FIG. 14 is a diagram depicting an example method for constructing RO groups with a frequency offset between an RO in SBFD symbol and an RO in non-SBFD symbols, according to some embodiments of the present disclosure.

Providing ROs for the SBFD-aware UE separated from ROs for the legacy UE may alleviate the issue caused by unaligned boundaries of the RO groups between the legacy UE and the SBFD-aware UE, in which the RO group for the SBFD-aware UE may span both SBFD symbol and non-SBFD symbol. However, if (e.g., when) a gNB changes its antenna configurations between SBFD symbol and non-SBFD symbol, providing separated ROs for the SBFD-aware UE and the legacy UE respectively may be problematic. Therefore, the aforementioned method (e.g., constructing two sets of RO groups) may be applied to ensure that all the usable ROs within an RO group are fully confined in SBFD symbol or non-SBFD symbol.

In the legacy procedures/approaches, an RO group may include valid ROs that utilize the same frequency resources. It may be desirable to have a frequency offset between the ROs located in SBFD symbols and non-SBFD symbols in response to a scenario that the RO configurations are shared between a SBFD-aware UE and a legacy UE. It may be beneficial to ensure that some ROs are confined within UL subband and are at the edges of UL BWP and UL subband in non-SBFD symbol and SBFD symbol.

In one or more embodiments, a method for constructing two sets of RO groups (e.g., a set of RO groups including ROs in SBFD symbol and the other set of RO groups including ROs in non-SBFD symbol) may be applied to address the scenario that the RO configurations are shared between the SBFD-aware UE and the legacy UE.

FIG. 14 shows an example of RO configurations being shared between the legacy UE and the SBFD-aware UE with a frequency offset being applied between ROs in SBFD symbol and ROs in non-SBFD symbol. The value of the frequency offset may be provided by a higher layer signaling. In this case, a SBFD-aware UE may construct two sets of RO groups, e.g., Set 0 of RO groups may include RO groups constructed by ROs in SBFD symbol, and Set 1 of RO groups may include RO groups constructed by ROs in non-SBFD symbol. For example, RO group #y+2 in Set 0 includes ROs in SBFD symbol, excluding ROs in non-SBFD symbol. Similarly, RO group #y+3 in Set 1 includes ROs in non-SBFD symbols, excluding ROs in SBFD symbols.

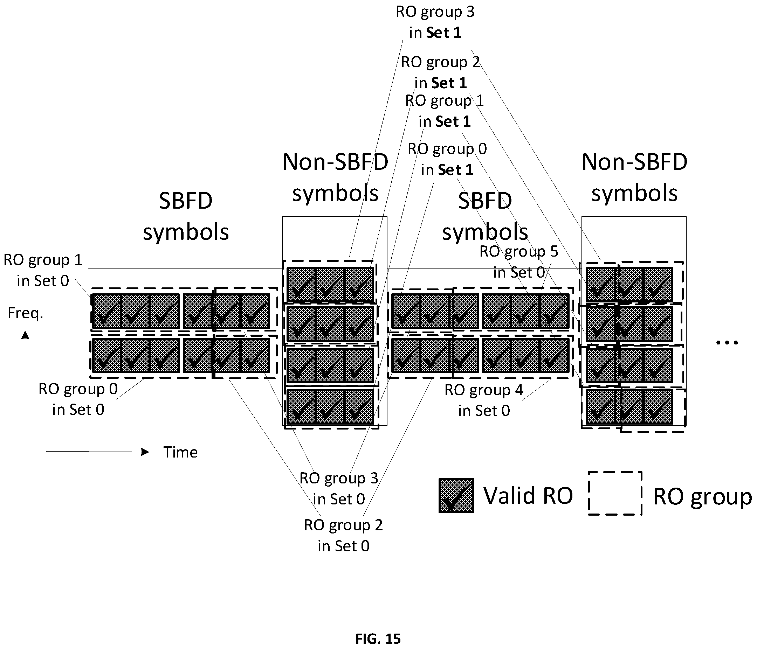

FIG. 15 is a diagram depicting an example method for constructing two sets of RO groups in response to FDMed ROs, according to some embodiments of the present disclosure.

If (e.g., when) there are ROs in SBFD symbol configured as flexible by *tdd-UL-DL-ConfigurationCommon,* applying a shift and/or a different interpretation creates replicas of the ROs in SBFD symbol. Therefore, the method disclosed in FIG. 6 may be applied to determine how an RO group is constructed and its corresponding set (e.g., Set 0 or Set 1).

If (e.g., when) there are multiple FDMed ROs, RO groups may be constructed utilizing the legacy rules that are applied corresponding to Set 0 and Set 1. For example, the first RO in the first RO group in Set 0 is determined as the first valid RO in Set 0 of symbol, e.g., SBFD symbol. Furthermore, the first ROs in the subsequent RO groups in Set 0 are determined in an increasing order in frequency domain first, and then in time domain across Set 0 of symbol, e.g., SBFD symbol. The same method (e.g., determining RO groups in frequency domain first, and then in time domain) is applied for Set 1 of RO groups in non-SBFD symbol.

Therefore, combining the methods disclosed in FIG. 4 and FIG. 15, the RO groups in each set may be determined as follows:

(1) The first valid RO in the first RO group in Set 0 may be the first valid PRACH occasion falling in SBFD symbols.
(2) The first valid RO in the first RO group in Set 1 may be the first valid PRACH occasion falling in non-SBFD symbols.
(3) The first valid PRACH occasion of subsequent RO groups in Set 0 may be determined based on an order of valid PRACH occasions in SBFD symbol. The order may be an increasing order of frequency resource indexes for frequency multiplexed PRACH occasions in SBFD symbol, and then the order may be an increasing order of time resource indexes for time multiplexed PRACH occasions in SBFD symbol.
(4) The first valid PRACH occasion of subsequent RO groups in Set 1 may be determined according to an order of valid PRACH occasions in non-SBFD symbol. The order may be an increasing order of frequency resource indexes for frequency multiplexed PRACH occasions in non-SBFD symbol, and then the order may be an increasing order of time resource indexes for time multiplexed PRACH occasions in non-SBFD symbol.

(5) For each frequency resource index for FDMed ROs, the first valid PRACH occasion of the first RO group in Set 0 may be the first valid PRACH occasion in SBFD symbol.

(6) The first valid PRACH occasion of subsequent RO groups in Set 0 may be after *TimeOffsetBetweenStartingRO* consecutive valid PRACH occasions in SBFD symbol in time domain from the first valid PRACH occasion of the previous set, where each PRACH occasion is associated with the same SS/PBCH block index, and each SS/PBCH block index is associated with same preamble. Alternatively, the first valid PRACH occasion of subsequent RO groups in Set 0 may be after the PRACH occasions of the previous RO group, if (e.g., when) *TimeOffsetBetweenStartingRO* is not provided.

(7) For each frequency resource index for FDMed ROs, the first valid PRACH occasion of the first RO group in Set 1 may be the first valid PRACH occasion in non-SBFD symbol.

(8) The first valid PRACH occasion of subsequent RO groups in Set 1 may be after *TimeOffsetBetweenStartingRO* consecutive valid PRACH occasions in non-SBFD symbol in time domain from the first valid PRACH occasion of the previous set, where each PRACH occasion is associated with same SSB index, and each SSB index is associated with same preamble. Alternatively, the first valid PRACH occasion of subsequent RO groups in Set 1 may be after the PRACH occasions of the previous RO group, if (e.g., when) *TimeOffsetBetweenStartingRO* is not provided.

In one or more embodiments, a SBFD-aware UE may use the legacy procedure to construct RO groups per symbol type, e.g., SBFD symbol or non-SBFD symbol. For example, the legacy procedure is applied to construct/determine RO groups based on valid ROs in SBFD symbol, and then, the same procedure is applied to determine RO groups based on valid ROs in non-SBFD symbol.

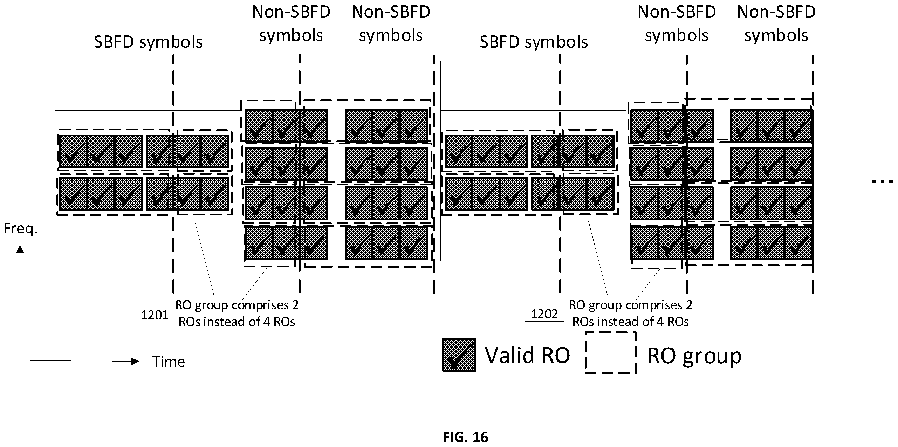

FIG. 16 is a diagram depicting an example RO group having suitable number of ROs, according to some embodiments of the present disclosure.

A set of RO groups may be determined to include a suitable number of ROs in each RO group of the determined set of RO groups. For example, in general, an RO group may have four ROs, and an RO group in the determined set of RO groups may have only two ROs. It may be beneficial if (e.g., when) the number of valid FDMed ROs in SBFD symbol is different from the number of valid FDMed ROs in non-SBFD symbols, and/or if (e.g., when) the FDMed ROs in SBFD symbol and the FDMed ROs in non-SBFD symbol occupy different RBs.

The RO space in the time domain may be divided into portions based on a nominal configured number of repetitions and whether *TimeOffsetBetweenStartingRO* is provided/configured. If (e.g., when) a portion includes both SBFD symbol and non-SBFD symbol (e.g., an RO group including ROs in SBFD symbol and ROs in non-SBFD symbol), this portion will be divided in response to transitioning from SBFD symbol to non-SBFD symbol, or vice versa. In some embodiments, the legacy approaches for constructing RO groups may be applied for each portion in the RO space.

FIG. 16 shows an example of 4 Msg1 repetitions. The portions are determined every 4 valid ROs in the time domain (e.g., dividing a portion every four valid ROs). All portions include either SBFD symbols or non-SBFD symbols, except a first portion 1201 and a second portion 1202 which each includes both types of symbols (e.g., both the first portion 1201 and the second portion 1202 include ROs in SBFD symbol and ROs in non-SBFD symbol). In this case, the first portion 1201 and the second portion 1202 are further divided into sub-portions in response to the transitioning form SBFD symbol to non-SBFD symbol, or vice versa. For example, each sub-portion may only include ROs in the same type of symbol (e.g., SBFD symbol or non-SBFD symbol). In some embodiments, the legacy procedures/approaches for constructing RO groups may be applied for each portion. As a result, all RO groups have 4 valid ROs, except the RO groups in the first portion 1201 and the second portion 1202 which have 2 valid ROs. It may be beneficial as dividing portions until each portion having ROs in the same type of symbol may ensure that all ROs within an RO group occupy the same RBs. Therefore, RO groups in the first portion 1201 and the second portion 1202, having only two Msg1 repetition, are allowed.

To construct an RO group in the portion containing both SBFD symbols and non-SBFD symbols, the legacy rule that all ROs within an RO group are to occupy the same RBs may be alleviated (e.g., canceled). Since the number of FDMed ROs in SBFD symbol is expected to be less the number of FDMed ROs in non-SBFD symbol, it may be beneficial to determine how ROs will be grouped. For example, the ROs are numbered in an increasing order in the frequency domain, e.g., frequency resource indexes for frequency multiplexed PRACH. Therefore, in the portions that include both SBFD symbol and non-SBFD symbol, ROs with the same frequency resource indexes are grouped together even if they occupy different RBs. In some embodiments, other rules may be applied to determine which ROs to be grouped together, for example, ROs in SBFD symbol with the lowest frequency resource index are grouped with the ROs in non-SBFD symbol with the higher frequency resource index.

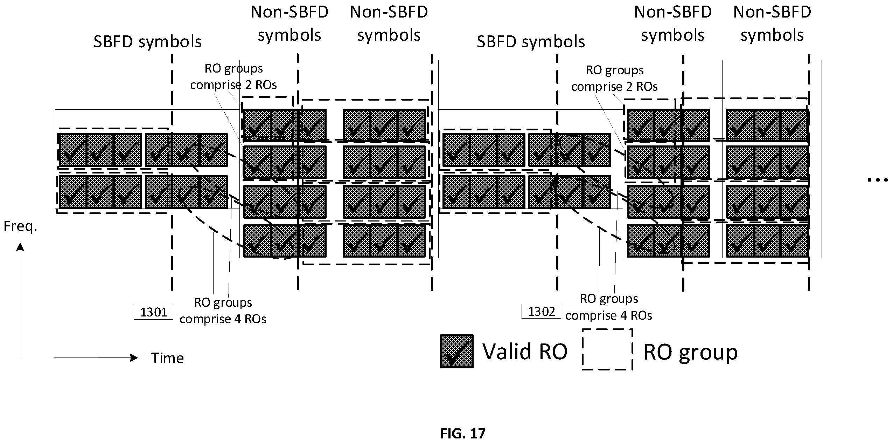

FIG. 17 is a diagram depicting an example RO group including valid ROs in different RBs, according to some embodiments of the present disclosure.

Referring to FIG. 17, an example of 4 Msg1 repetitions may be applied. The RO space may be divided into portions every 4 valid ROs in the time domain. For example, an RO group/portion may be determined/constructed utilizing 4 valid ROs. All portions include either SBFD symbol or non-SBFD symbol, except a first portion 1301 and a second portion 1302 which include both types of symbols (e.g., SBFD symbol and non-SBFD symbol). In this case, the first portion 1301 and the second portion 1302 are further divided into sub-portions in response to the transitioning from SBFD symbol to non-SBFD symbol, or vice versa.

In the first portion 1301 and the second portion 1302, ROs in SBFD symbol with the lowest frequency resource index are grouped with ROs in non-SBFD symbol with the lowest frequency resource index, and ROs in SBFD symbol with the second lowest frequency resource index are grouped with ROs in non-SBFD symbol with the second lowest frequency resource index. ROs in non-SBFD symbols with the highest frequency resource index are not grouped with any ROs in SBFD symbols. Therefore, the constructed RO group may include 2 ROs, instead of 4 ROs.

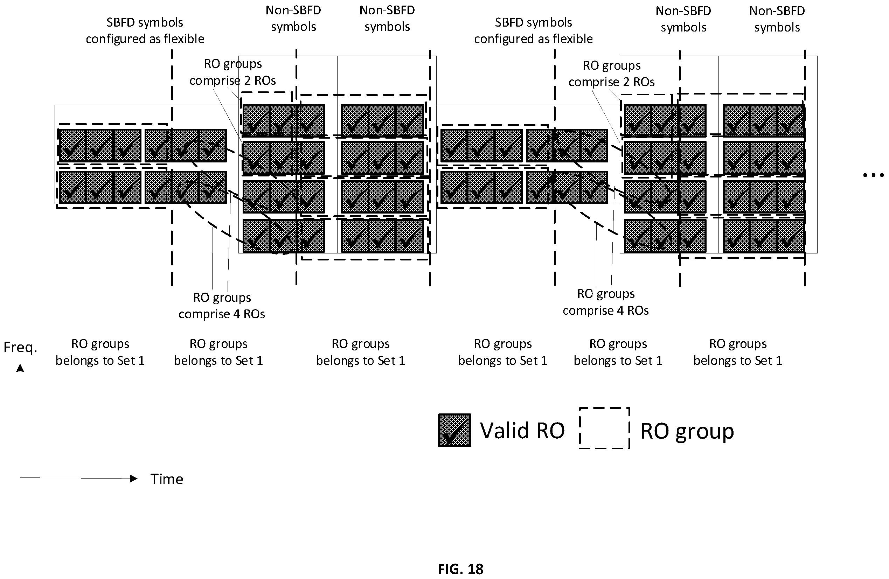

FIG. 18 is a diagram depicting an example RO group in Set 1 with SBFD symbol configured as flexible, according to some embodiments of the present disclosure.

In response to that there are ROs in SBFD symbol configured as flexible by *tdd-UL-DL-ConfigurationCommon,* a combination of the methods disclosed above may be applied as follows. Since the ROs in SBFD symbols configured as flexible symbols are visible to legacy UEs, the main objective of the following solution is to keep the similarity between both legacy UEs and SBFD-aware UEs.

The approach disclosed in FIG. 18 may be to apply the framework disclosed in FIG. 16 and FIG. 17 on constructing RO groups of Set 1. Though the RO groups of Set 1 may be RO groups including ROs in non-SBFD symbols, the RO groups of Set 1 may also include RO groups constructed by ROs in SBFD symbols configured as flexible by *tdd-UL-DL-ConfigurationCommon.* Furthermore, constructing RO groups of Set 0, e.g., constructing RO groups including ROs in SBFD symbols configured as downlink by *tdd-UL-DL-ConfigurationCommon,* may be constructed based on the above approaches as the number of FDMed ROs is the same.

For example, the RO space in the time domain is divided into portions based on the nominal number of repetitions (e.g., the minimal number of repetitions) and whether *TimeOffsetBetweenStartingRO* is configured. If any portion includes both SBFD symbols and non-SBFD symbols, the RO group may be constructed based on frequency resource indexes within a portion including ROs in SBFD symbol configured as flexible and ROs in non-SBFD symbol. In response to that there is no RO associated with the same frequency resource index in SBFD symbols and there are ROs in non-SBFD symbol within the portion, a smaller RO group may be constructed, e.g., an RO group including two ROs.

In one or more embodiments, the divided portions may be contiguous in time domain, as shown in FIG. 18. The divided portions may not be contiguous in time domain. For example, there may be an RO group of Set 0 between RO groups of Set 1. The UE may first determine ROs in SBFD symbol configured as flexible and ROs in non-SBFD symbol, excluding the ROs in SBFD symbols configured as downlink. Then the UE may construct an RO group based on the determined ROs as shown in FIG. 18, where the determined ROs are not necessarily contiguous and/or are not in the same time domain. Then, the UE may construct the RO group for Set 1 based on the approaches described as above. In some embodiments, the UE may apply the constructed RO groups based on original location of each RO.

In some embodiments, the approaches for constructing RO groups in response to FDMed ROs being configured may be applied for the case that FDMed ROs are not configured, where the ROs in SBFD symbols and the ROs in non-SBFD symbols occupy different RBs.

According to the present disclosure, for enhancing the SBFD operation, one or more methods may include determining RO groups by:

(1) constructing two sets for RO groups, where a first set includes RO groups including ROs in the SBFD symbols and a second set includes RO groups including ROs in non-SBFD symbols;
(2) dropping a new validation rule on the RO group level;
(3) introducing a new dropping rule in response to an RO group spanning ROs in SBFD symbols and ROs in non-SBFD symbols, e.g., based on the location of the first RO in the RO group, and/or based on the portion of the RO group that has more ROs; and
(4) receiving an indication from a gNB which indicates whether an RO group may span ROs in SBFD symbols and ROs in non-SBFD symbols via a higher layer signaling.

Furthermore, one or more rules for determining how the SBFD-aware UE should act, e.g., a SBFD-aware UE or a legacy UE, may be applied as follows:

(1) the SBFD-aware UE may always act as a SBFD-aware UEs, which means that the SBFD-aware UE may not act as a legacy UE; and
(2) the SBFD-aware may select to act as a legacy UE based on UE implementation or based on a threshold that is predefined or configured by a gNB.

To address a scenario of sharing RACH configurations between a SBFD-aware UE and a legacy UE, the following parameters may be modified:

(1) the number of repetitions may be different for the legacy UE and the SBFD-aware UE; and

(2) a different threshold value may be applied to determine the applicable number of repetitions.

For shared ROs, but separate preamble between a legacy UE and a SBFD-aware UE, one or more methods may be applied as follows:

(1) applying preamble partitioning only on ROs in non-SBFD symbols; and

(2) in response to a SBFD-aware UE transmitting multiple PRACH in RO groups across SBFD symbol and non-SBFD symbol, applying preamble partition.

Additionally, the legacy constraint/restriction that each SSB index is associated with same preamble index in all valid PRACH occasions within the RO group may be dropped. For example, in legacy, the RO group including valid ROs associated with the same SSB index and each SSB index associated with same preamble index are in valid PRACH occasions within the RO group.

Furthermore, the constraint/restriction that all ROs in an RO group occupying the same frequency resource is modified to apply to a set of RO groups where each RO group is in the same symbol type, e.g., SBFD symbols or non-SBFD symbols.

In addition, applying new rules/procedures for constructing RO groups if (e.g., when) ROs in SBFD symbols and ROs in non-SBFD symbols occupy different RBs.

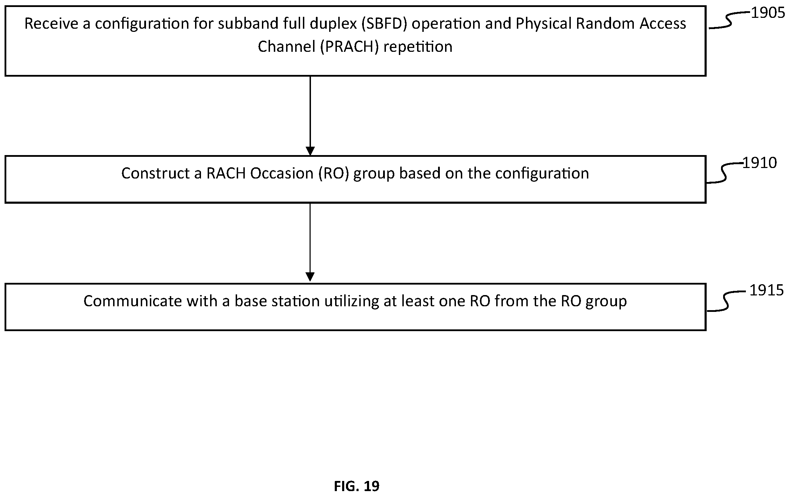

FIG. 19 is a flowchart depicting a method for constructing RO groups, according to some embodiments of the present disclosure. Although FIG. 19 illustrates various operations in a method for constructing the RO groups, one or more embodiments according to the present disclosure are not limited thereto, and according to one or more embodiments, the method may include additional operations or fewer operations, or the order of operations may vary, unless otherwise stated or implied, without departing from the spirit and scope of embodiments according to the present disclosure.

Referring to FIG. 19, at operation 1905, a UE receives a configuration for SBFD operation and PRACH repetition.

An operation 1910, the UE constructs a RO group based on the configuration. The RO group may include one or more ROs from a set of SBFD symbols and a set of non-SBFD symbols. In some embodiments, the one or more ROs of the RO groups may include one or more of at least one RO from the set of SBFD symbols; at least one RO from the set of non-SBFD symbols; and/or at least one RO from across the set of SBFD symbols and the set of non-SBFD symbols. In some embodiments, the RO group may include a plurality of ROs and include at least one RO from the set of SBFD symbols and at least one RO from the set of non-SBFD symbols.

In some embodiments, the UE may further send, to a base station, a communication signal. The communication signal may be configured based on the RO group to establish a communication between the UE and the base station.

In some embodiments, the constructing of the RO group includes: constructing a first set of RO groups and a second set of RO groups. Each of the RO groups in the first set includes one or more ROs from the set of SBFD symbols, and each of the RO groups in the second set includes one or more ROs from the set of non-SBFD symbols. The constructed RO group is included in the first set of RO groups and the second set of RO groups.

In some embodiments, each of the RO groups in the first set may exclude an RO in non-SBFD symbol (e.g., only including ROs in SBFD symbol). Each of the RO groups in the second set may exclude an RO in SBFD symbol (e.g., only including ROs in non-SBFD symbol).

In some embodiments, the UE may further receive a threshold data for determining a number of PRACH repetitions, where the threshold data may be based on a Reference Signal Received Power (RSRP) level, and determine, the number of PRACH repetitions by comparing a RSRP of a downlink pathloss reference signal with the threshold value. The constructed RO group may be based on the determined number of PRACH repetitions.

In some embodiments, the threshold data may indicate a first threshold value provided by a first higher layer signaling for the first set of RO groups, the threshold data may indicate a second threshold value provided by a second higher layer signaling for the second set of RO groups, and the first threshold value is different from the second threshold value.

In some embodiments, the UE may further apply a legacy procedure to the first set of RO groups in response to a determination that a number of ROs in SBFD symbol being different from a number of ROs in non-SBFD symbol.

In some embodiments, the UE may further invalidate the RO group including the at least one RO from the set of SBFD symbols and the at least one RO from the set of non-SBFD symbols.

In some embodiments, the UE may further drop a least one RO from the RO group including the at least one RO from the set of SBFD symbols and the at least one RO from the set of non-SBFD symbols. The number of the dropped at least one RO is less than a number of remaining ROs.

In some embodiments, the at least one RO in SBFD symbol and the at least one RO in non-SBFD symbol may occupy different PRBs and may be with the same frequency resource index.

In some embodiments, the UE may further receive an indication via a higher layer signaling. The indication may indicate whether an RO group includes at least one RO in SBFD symbol and at least one RO in non-SBFD symbol.

At operation 1915, the UE communicates with a base station (e.g., a gNB) utilizing at least one RO from the RO group. For example, the UE may modify the manner in which the UE will send a communication with the gNB in step 1915 based on the RO group determined in step 1910, such that a current antenna configuration of the gNB will efficiently receive and interpret the communication.

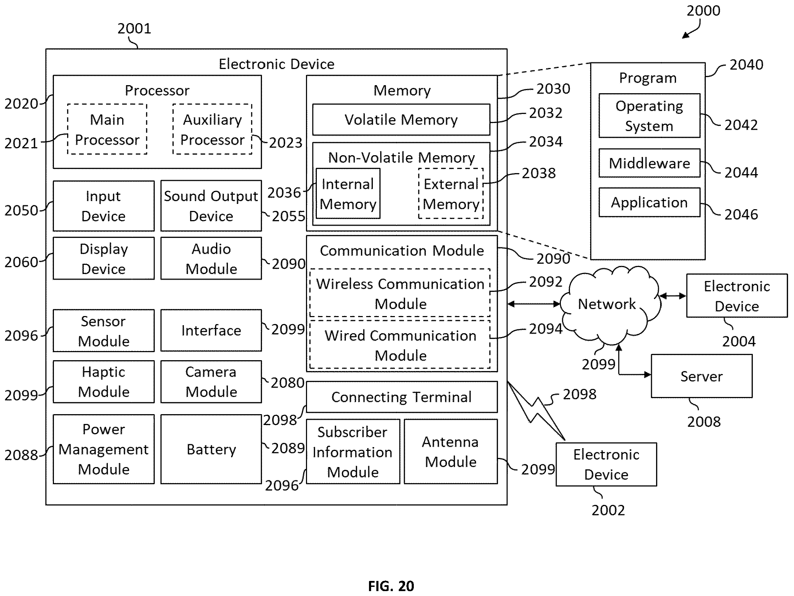

FIG. 20 is a block diagram of an electronic device in a network environment, according to some embodiments of the present disclosure.

Referring to FIG. 20, an electronic device 2001 in a network environment 2000 may communicate with an electronic device 2002 via a first network 2098 (e.g., a short-range wireless communication network), or with an electronic device 2004 or a server 2008 via a second network 2099 (e.g., a long-range wireless communication network). The electronic device 2001 may communicate with the electronic device 2004 via the server 2008. The electronic device 2001 may include a processor 2020, a memory 2030, an input device 2050, a sound output device 2055, a display device 2060, an audio module 2070, a sensor module 2076, an interface 2077, a haptic module 2079, a camera module 2080, a power management module 2088, a battery 2089, a communication module 2090, a subscriber identification module (SIM) card 2096, and/or an antenna module 2097. In one embodiment, at least one of the components (e.g., the display device 2060 or the camera module 2080) may be omitted from the electronic device 2001, or one or more other components may be added to the electronic device 2001. Some of the components may be implemented as a single integrated circuit (IC). For example, the sensor module 2076 (e.g., a fingerprint sensor, an iris sensor, or an illuminance sensor) may be embedded in the display device 2060 (e.g., a display).

The processor 2020 may execute software (e.g., a program 2040) to control at least one other component (e.g., a hardware or a software component) of the electronic device 2001 coupled to the processor 2020, and may perform various data processing or computations.

As at least part of the data processing or computations, the processor 2020 may load a command or data received from another component (e.g., the sensor module 2076 or the communication module 2090) in volatile memory 2032, may process the command or the data stored in the volatile memory 2032, and may store resulting data in non-volatile memory 2034. The processor 2020 may include a main processor 2021 (e.g., a central processing unit or an application processor (AP)), and an auxiliary processor 2023 (e.g., a graphics processing unit (GPU), an image signal processor (ISP), a sensor hub processor, or a communication processor (CP)) that is operable independently from, or in conjunction with, the main processor 2021. Additionally or alternatively, the auxiliary processor 2023 may be adapted to consume less power than the main processor 2021, or to execute a particular function. The auxiliary processor 2023 may be implemented as being separate from, or a part of, the main processor 2021.

The auxiliary processor 2023 may control at least some of the functions or states related to at least one component (e.g., the display device 2060, the sensor module 2076, or the communication module 2090), as opposed to the main processor 2021 while the main processor 2021 is in an inactive (e.g., sleep) state, or together with the main processor 2021 while the main processor 2021 is in an active state (e.g., executing an application). The auxiliary processor 2023 (e.g., an image signal processor or a communication processor) may be implemented as part of another component (e.g., the camera module 2080 or the communication module 2090) functionally related to the auxiliary processor 2023.

The memory 2030 may store various data used by at least one component (e.g., the processor 2020 or the sensor module 2076) of the electronic device 2001. The various data may include, for example, software (e.g., the program 2040) and input data or output data for a command related thereto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input device 2050 may receive a command or data to be used by another component (e.g., the processor 2020) of the electronic device 2001, from the outside (e.g., a user) of the electronic device 2001. The input device 2050 may include, for example, a microphone, a mouse, or a keyboard.

The sound output device 2055 may output sound signals to the outside of the electronic device 2001. The sound output device 2055 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 2060 may visually provide information to the outside (e.g., to a user) of the electronic device 2001. The display device 2060 may include, for example, a display, a hologram device, or a projector, and may include control circuitry to control a corresponding one of the display, hologram device, and projector. The display device 2060 may include touch circuitry adapted to detect a touch, or may include sensor circuitry (e.g., a pressure sensor) adapted to measure the intensity of force incurred by the touch.

The audio module 2070 may convert a sound into an electrical signal and vice versa. The audio module 2070 may obtain the sound via the input device 2050 or may output the sound via the sound output device 2055 or a headphone of an external electronic device 2002 directly (e.g., wired) or wirelessly coupled to the electronic device 2001.

The sensor module 2076 may detect an operational state (e.g., power or temperature) of the electronic device 2001, or an environmental state (e.g., a state of a user) external to the electronic device 2001. The sensor module 2076 may then generate an electrical signal or data value corresponding to the detected state. The sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 2077 may support one or more specified protocols to be used for the electronic device 2001 to be coupled to the external electronic device 2002 directly (e.g., wired) or wirelessly. The interface 2077 may include, for example, a high-definition multimedia interface (HDMI), a universal serial bus (USB) interface, a secure digital (SD) card interface, or an audio interface.

A connecting terminal 2078 may include a connector via which the electronic device 2001 may be physically connected to the external electronic device 2002. The connecting terminal 2078 may include, for example, an HDMI connector, a USB connector, an SD card connector, or an audio connector (e.g., a headphone connector).

The haptic module 2079 may convert an electrical signal into a mechanical stimulus (e.g., a vibration or a movement) or an electrical stimulus, which may be recognized by a user via tactile sensation or kinesthetic sensation. The haptic module 2079 may include, for example, a motor, a piezoelectric element, or an electrical stimulator.

The camera module 2080 may capture a still image or moving images. The camera module 2080 may include one or more lenses, image sensors, image signal processors, or flashes. The power management module 2088 may manage power that is supplied to the electronic device 2001. The power management module 2088 may be implemented as at least part of, for example, a power management integrated circuit (PMIC).

The battery 2089 may supply power to at least one component of the electronic device 2001. The battery 2089 may include, for example, a primary cell that is not rechargeable, a secondary cell that is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008), and may support performing communication via the established communication channel. The communication module 2090 may include one or more communication processors that are operable independently from the processor 2020 (e.g., the AP), and may support a direct (e.g., wired) communication or a wireless communication. The communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as BLUETOOTHTM, wireless-fidelity (Wi-Fi) direct, or a standard of the Infrared Data Association (IrDA)), or via the second network 2099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 2092 may identify and authenticate the electronic device 2001 in a communication network, such as the first network 2098 or the second network 2099, utilizing subscriber information (e.g., international mobile subscriber identity (IMSI)) stored in the subscriber identification module 2096.

The antenna module 2097 may transmit or receive a signal or power to or from the outside (e.g., the external electronic device) of the electronic device 2001. The antenna module 2097 may include one or more antennas. The communication module 2090 (e.g., the wireless communication module 2092) may select at least one of the one or more antennas appropriate for a communication scheme used in the communication network, such as the first network 2098 or the second network 2099. The signal or the power may then be transmitted or received between the communication module 2090 and the external electronic device via the selected at least one antenna.

Commands or data may be transmitted or received between the electronic device 2001 and the external electronic device 2004 via the server 2008 coupled to the second network 2099. Each of the electronic devices 2002 and 2004 may be a device of a same type as, or a different type, from the electronic device 2001. All or some of operations to be executed at the electronic device 2001 may be executed at one or more of the external electronic devices 2002 or 2004, or server 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 2001. The electronic device 2001 may provide the outcome, with or without further processing of the outcome, as at least part of a reply to the request. To that end, cloud computing, distributed computing, or client-server computing technology may be utilized, for example.

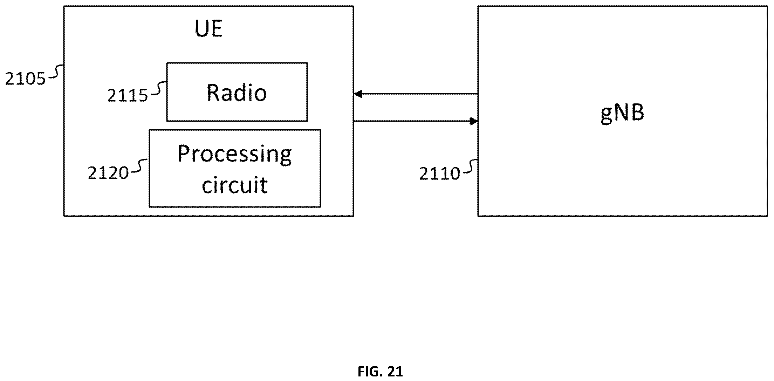

FIG. 21 shows a system including a UE 2105 and a gNB 2110, in communication with each other. The UE may include a radio 2115 and a processing circuit (or a means for processing) 2120, which may perform various methods disclosed herein, e.g., the method illustrated in FIG. 19. For example, the processing circuit 2120 may receive, via the radio 2115, transmissions from the network node (gNB) 2110, and the processing circuit 2120 may transmit, via the radio 2115, signals to the gNB 2110.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims, with functional equivalents thereof to be included therein.

## Claims

1. A method comprising:

   receiving (1905), by a user equipment, UE, (2105) a configuration for subband full duplex, SBFD, operation and Physical Random Access Channel, PRACH, repetition; and
   constructing (1910), by the UE (2105), a RACH Occasion, RO, group based on the configuration, wherein the RO group comprises one or more ROs from a set of SBFD symbols and a set of non-SBFD symbols.

2. The method of claim 1, wherein the one or more ROs of the RO groups comprise one or more of:

at least one RO from the set of SBFD symbols;
at least one RO from the set of non-SBFD symbols; or
at least one RO from across the set of SBFD symbols and the set of non-SBFD symbols.

3. The method of claim 1 or 2, wherein the RO group comprises a plurality of ROs and includes at least one RO from the set of SBFD symbols and at least one RO from the set of non-SBFD symbols.

4. The method of any one of claims 1 to 3, further comprising sending (1915), by the UE (2105), to a base station (2110), a communication signal, wherein the communication signal is configured based on the RO group to establish a communication between the UE (2105) and the base station (2110).

5. The method of claim 1, wherein the constructing of the RO group further comprises:
constructing, by the UE (2105), a first set of RO groups and a second set of RO groups, wherein each of the RO groups in the first set comprises one or more ROs from the set of SBFD symbols, and each of the RO groups in the second set comprises one or more ROs from the set of non-SBFD symbols, wherein the constructed RO group is included in the first set of RO groups and the second set of RO groups.

6. The method of claim 5, wherein each of the RO groups in the first set comprises only the one or more ROs from the set of SBFD symbols, and wherein each of the RO groups in the second set comprises only the one or more ROs from the set of non-SBFD symbols.

7. The method of claim 5 or 6, further comprising:

receiving, by the UE (2105), threshold data for determining a number of PRACH repetitions, wherein the threshold data is based on a Reference Signal Received Power, RSRP, level, and
determining, by the UE (2105), the number of PRACH repetitions by comparing a RSRP of a downlink pathloss reference signal with the threshold data
wherein the constructed RO group is based on the determined number of PRACH repetitions.

8. The method of claim 7, wherein:

the threshold data indicates a first threshold value provided by a first higher layer signaling for the first set of RO groups,

the threshold data indicates a second threshold value provided by a second higher layer signaling for the second set of RO groups, and
the first threshold value is different from the second threshold value.

9. The method of any one of claims 5 to 8, further comprising applying a legacy procedure to the first set of RO groups in response to a determination that a number of ROs in SBFD symbol is different from a number of ROs in non-SBFD symbol.

10. The method of claim 3 or 4, further comprising:
invalidating the RO group comprising the at least one RO from the set of SBFD symbols and the at least one RO from the set of non-SBFD symbols.

11. The method of any one of claims 3, 4 and 10, further comprising:
dropping a least one RO from the RO group comprising the at least one RO from the set of SBFD symbols and the at least one RO from the set of non-SBFD symbols, wherein a number of the dropped at least one RO is less than a number of remaining ROs.

12. The method of any one of claims 3, 4, 10 and 11, wherein the at least one RO in SBFD symbol and the at least one RO in non-SBFD symbol occupy different physical resource blocks, PRBs, and are with same frequency resource index.

13. The method of any one of claims 3, 4, 10, 11 and 12 further comprising:
receiving, by the UE (2105), an indication via a higher layer signaling, wherein the indication indicates whether an RO group comprises the at least one RO in SBFD symbol and the at least one RO in non-SBFD symbol.

14. A user equipment, UE, (2105) comprising a processing circuit (2120), the processing circuit (2120) being configured to perform the method according to any one of claims 1 to 13.

EP 4 629 550 A1

**FIG. 1**

FIG. 2

FIG. 3

**FIG. 4**

**FIG. 5**

RO group #y+2, in Set 1
RO group #y+3, in Set 1
RO group #y+5, in Set 1
RO group #y+8, in Set 1
First two ROs in RO group #y+9, in Set 1

DL-UL-TDD slot configuration period
DL-UL-TDD slot configuration period
DL-UL-TDD slot configuration period

D D D F U D D D F U D D D F U

Freq.
TDD Carrier
DL BWP
UL BWP

Time

RO group #y, in Set 0
RO group #y+1, in Set 0
RO group #y+4, in Set 0
RO group #y+6, in Set 0
First two ROs in RO group #y+7, in Set 0

(A) SBFD aware UE cannot use the ROs outside the UL subband

DL BWP   UL subband   UL BWP

Valid RO for legacy UEs
Invalid RO for legacy UEs
Valid RO for SBFD aware UEs
Valid RO for SBFD aware UEs

**FIG. 6A**

EP 4 629 550 A1

29

FIG. 6B

**FIG. 7**

EP 4 629 550 A1

FIG. 8

DL-UL-TDD slot configuration period ──── DL-UL-TDD slot configuration period

D | D | D | F | U | D | D | D | F | U

Freq.

TDD Carrier

DL BWP

RO group #y | RO group #y+1 | RO group #y+2 | RO group #y+3 | RO group #y+4 | RO group #y+5

Time

These RO groups cannot be used for multiple PRACH transmssions, though they include valid ROs that can be used for a single PRACH transmission.

From the perspective of **SBFD aware** UE

☐ DL BWP   ⊞ UL subband   ▒ UL BWP   ☒ Valid RO   ☒ Invalid RO

32

EP 4 629 550 A1

...

From the perspective of
**SBFD aware** UE

The portion of the RO group that fall in different symbol type than the symbol type of the first RO group is dropped and not used for multiple PRACH transmissions

☐ DL BWP   ⊞ UL subband   ▦ UL BWP   ✓ Valid RO   ✗ Invalid RO

**FIG. 9**

EP 4 629 550 A1

33

The portion of the RO group that has less number of ROs in particular symbol type, i.e., SBFD symbols or non-SBFD symbols, is dropped and not used for multiple PRACH transmissions

From the perspective of **SBFD aware** UE

DL BWP    UL subband    UL BWP    Valid RO    Invalid RO

FIG. 10

The portion of the RO group that falls in SBFD symbol configured as flexible is dropped when the RO group comprises ROs in SBFD symbol configured as downlink and SBFD symbol configured as flexible

From the perspective of **SBFD aware** UE

☐ DL BWP   ▦ UL subband   ░ UL BWP   ▨ Valid RO   ▧ Invalid RO

**FIG. 11**

FIG. 12A

FIG. 12B

FIG. 13

FIG. 14

**FIG. 15**

FIG. 16

**FIG. 17**

FIG. 18

Receive a configuration for subband full duplex (SBFD) operation and Physical Random Access Channel (PRACH) repetition ⌐1905

Construct a RACH Occasion (RO) group based on the configuration ⌐1910

Communicate with a base station utilizing at least one RO from the RO group ⌐1915

**FIG. 19**

FIG. 20

FIG. 21

EP 4 629 550 A1

**EUROPEAN SEARCH REPORT**

Application Number

EP 25 16 8272

## DOCUMENTS CONSIDERED TO BE RELEVANT

| Category | Citation of document with indication, where appropriate, of relevant passages | Relevant to claim |
|---|---|---|
| X | TOMOYA NUNOME ET AL: "Discussion on SBFD random access operation", 3GPP DRAFT; R1-2400827; TYPE DISCUSSION; NR_DUPLEX_EVO-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568601, Retrieved from the Internet: URL:https://www.3gpp.org/ftp/TSG_RAN/WG1_RL1/TSGR1_116/Docs/R1-2400827.zip R1-2400827.docx [retrieved on 2024-02-19] * the whole document * | 1-14 |
| A | US 2021/058971 A1 (MOLAVIANJAZI EBRAHIM [US] ET AL) 25 February 2021 (2021-02-25) * paragraphs [0118] - [0131] * | 1-14 |
| A | WO 2024/016278 A1 (ZTE CORP [CN]) 25 January 2024 (2024-01-25) * page 15, line 8 - page 23, line 4 * | 1-14 |

**CLASSIFICATION OF THE APPLICATION (IPC)**

INV.
H04L5/00
H04W74/0833

**TECHNICAL FIELDS SEARCHED (IPC)**

H04L
H04W

The present search report has been drawn up for all claims

| Place of search | Date of completion of the search | Examiner |
|---|---|---|
| The Hague | 19 August 2025 | Sorrentino, Andrea |

EPO FORM 1503 03.82 (P04C01)

## ANNEX TO THE EUROPEAN SEARCH REPORT
## ON EUROPEAN PATENT APPLICATION NO.

EP 25 16 8272

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | | Publication date |
|---|---|---|---|---|
| US 2021058971 A1 | 25-02-2021 | EP | 3997949 A1 | 18-05-2022 |
| | | EP | 4586732 A2 | 16-07-2025 |
| | | US | 2021058971 A1 | 25-02-2021 |
| | | US | 2022256612 A1 | 11-08-2022 |
| | | US | 2023125571 A1 | 27-04-2023 |
| | | WO | 2021034084 A1 | 25-02-2021 |
| WO 2024016278 A1 | 25-01-2024 | AU | 2022470177 A1 | 02-01-2025 |
| | | CN | 119605278 A | 11-03-2025 |
| | | EP | 4537609 A1 | 16-04-2025 |
| | | US | 2024407010 A1 | 05-12-2024 |
| | | WO | 2024016278 A1 | 25-01-2024 |

EPO FORM P0459

For more details about this annex : see Official Journal of the European Patent Office, No. 12/82